# EUROPEAN PATENT SPECIFICATION

(11) **EP 4 346 274 B1**
(45) Date of publication and mention of the grant of the patent: **19.08.2026**
(21) Application number: 23200451.5
(22) Date of filing: 28.09.2023
(51) Int. Cl.: H04W 28/16, H04W 74/0808, H04W 84/12, H04W 92/20, H04W 72/21

(54) **FREQUENCY RESOURCE ASSIGNMENT IN MULTI-AP TRANSMISSION**
FREQUENZRESSOURCENZUWEISUNG IN EINER MULTI-AP-ÜBERTRAGUNG
ATTRIBUTION DE RESSOURCES DE FRÉQUENCE DANS UNE TRANSMISSION À AP MULTIPLES

(30) Priority: 28.09.2022 US 202263410675 P
(43) Date of publication of application: 03.04.2024
(73) Proprietor: Comcast Cable Communications, LLC, Philadelphia, PA 19103 (US)
(72) Inventor: LANANTE, Leonardo Alisasis, Philadelphia, 19103 (US); KIM, Jeongki, Philadelphia, 19103 (US); DINAN, Esmael Hejazi, Philadelphia, 19103 (US)
(74) Representative: V.O.

(56) References cited:
- WO-A1-2021/141211
- US-A1- 2023 103 807
- YONGHO SEOK (MEDIATEK): "Coordinated OFDMA Operation", vol. 802.11 EHT; 802.11be, 10 November 2019 (2019-11-10), pages 1 - 16, XP068164295, Retrieved from the Internet <URL:https://mentor.ieee.org/802.11/dcn/19/11-19-1788-00-00be-coordinated-ofdma-operation.pptx> [retrieved on 20191110]

## Description

### CROSS-REFERENCE TO RELATED APPLICATIONS

This application claims the benefit of U.S. Provisional Application No. 63/410,675, filed on September 28, 2022.

### BACKGROUND

An access point (AP) may be a second AP (e.g., slave AP) or a first AP (e.g., master AP). A second AP transmits to one or more users. A second AP may use a frequency allocation for transmissions.

Document WO 2021/141211 A1 relates to a method of switching channels of STAs for multi-AP transmission in a wireless local area network (WLAN) system including a plurality of access points (APs).

### SUMMARY

The following summary presents a simplified summary of certain features. The summary is not an extensive overview and is not intended to identify key or critical elements. The invention is defined by the appended independent claims and further embodiments are described by the dependent claims.

An AP may communicate with one or more computing devices (e.g., wireless devices and/or stations (STAs)). A second AP may communicate with a first AP. A first AP may allocate a frequency for a second AP. For example, an indication as to whether a second AP intends to transmit to multiple users during a multi-AP transmission may be transmitted by the second AP to a first AP . The first AP may assign the second AP its primary channel for the multi-AP transmission, for example, based on the indication from the second AP.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows example wireless communication networks.
FIG. 2 shows example devices in a communication network.
FIG. 3 shows an example format of a Medium Access Control (MAC) frame.
FIG. 4 shows an example of a Quality of Service (QoS) null frame indicating buffer status information.
FIG. 5 shows an example of a multi-AP network.
FIG. 6 shows an example of Enhanced Distributed Channel Access (EDCA) and Coordinated Orthogonal Frequency Division Multiple Access (COFDMA).
FIG. 7 shows an example procedure for setting up a multi-AP transmission.
FIG. 8 shows an example multi-AP transmission setup.
FIG. 9 shows an example procedure for setting up a multi-AP transmission.
FIG. 10 shows an example transmission of a multi-AP transmission setup.
FIGS. 11A-11B show example frames which may be used by an AP to signal its intent to transmit to multiple users during a multi-AP transmission.
FIG. 12 shows an example procedure for setting up a multi-AP transmission.
FIG. 13 shows an example procedure for setting up a multi-AP transmission.
FIG. 14 shows an example procedure for setting up a multi-AP transmission.
FIG. 15 shows an example procedure for setting up a multi-AP transmission.
FIG. 16 shows an example procedure for setting up a multi-AP transmission.
FIG. 17 shows an example frame for setting up a multi-AP transmission.
FIG. 18 shows an example procedure for setting up a multi-AP transmission.
FIG. 19 shows an example frame for setting up a multi-AP transmission.
FIG. 20 shows an example process.
FIG. 21 shows an example process.
FIG. 22 shows an example process.
FIG. 23 shows an example process.
FIG. 24 shows example elements of a computing device that may be used to implement any of the various devices described herein.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

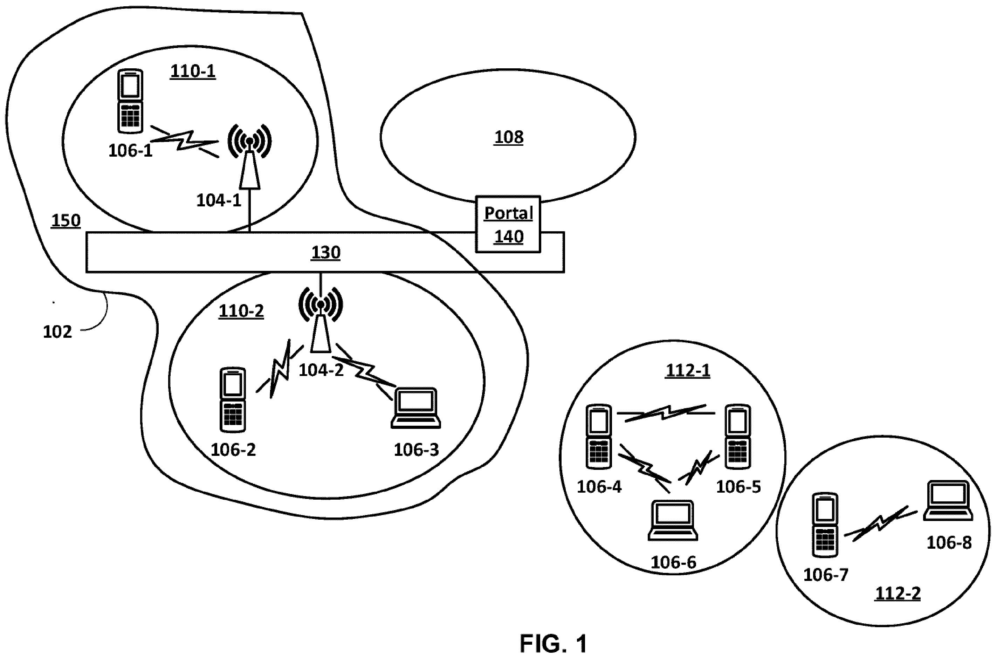

FIG. 1 shows example wireless communication networks. The example wireless communication networks may be a wireless local area network (WLAN) 102. The WLAN 102 may comprise an Institute of Electrical and Electronic Engineers (IEEE) 802.11 infrastructure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A computing device (e.g., wireless device and/or STA) may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (UE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

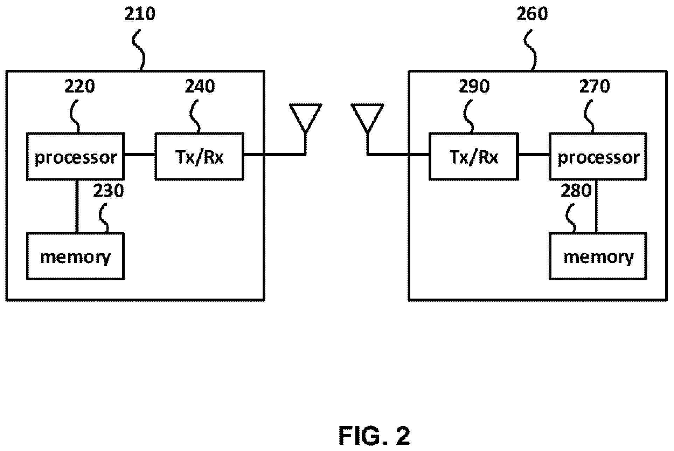

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.1be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

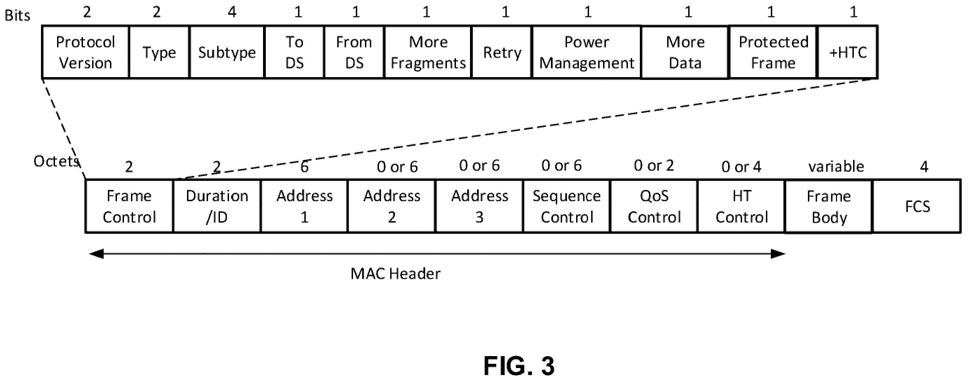

FIG. 3 shows an example format of a MAC frame. In operation, a STA may construct a subset of MAC frames for transmission and may decode a subset of received MAC frames upon validation. The particular subsets of frames that a STA may construct and/or decode may be determined by the functions supported by the STA. A STA may validate a received MAC frame using a frame check sequence (FCS) contained in the frame and may interpret certain fields from the MAC headers of all frames.

As shown in FIG. 3, a MAC frame may comprise a MAC header, a variable length frame body, and a frame check sequence (FCS). The MAC header may comprise a frame control field, an optional duration/ID field, address fields, an optional sequence control field, an optional QoS control field, and an optional high throughput (HT) control field.

The frame control field may comprise the following subfields: protocol version, type, subtype, To DS, From DS, more fragments, retry, power management, more data, protected frame, and +HTC (high throughput control). The protocol version subfield is invariant in size and placement across all revisions of the IEEE 802.11 standard. The value of the protocol version subfield may be 0 for MAC frames.

The type and subtype subfields together identify the function of the MAC frame. There are three frame types: control, data, and management. Each of the frame types has several defined subtypes. Bits within the subtype subfield may be used to indicate a specific modification of the basic data frame (subtype 0). For example, in data frames, the most significant bit (MSB) of the subtype subfield, bit 7 (B7) of the frame control field, is defined as the QoS subfield. For example, if the QoS subfield is set to 1, it may indicate a QoS subtype data frame, which is a data frame that contains a QoS control field in its MAC header. The second MSB of the subtype field, bit 6 (B6) of the frame control field, if set to 1 in data subtypes, may indicate a data frame that contain no frame body field.

The To DS subfield may indicate whether a data frame is destined to the distribution system (DS). The From DS subfield may indicate whether a data frame originates from the DS. The more fragments subfield may be set to 1 in all data or management frames that have another fragment to follow of the MAC service data unit (MSDU) or MAC management protocol data unit (MMPDU) carried by the MAC frame. The more fragments subfield may be set to 0 in all other frames in which the more fragments subfield is present.

The retry subfield may be set to 1 in any data or management frame that is a retransmission of an earlier frame. The retry subfield may be set to 0 in all other frames in which the retry subfield is present. A receiving STA may use this indication to aid in the process of eliminating duplicate frames. These rules may not apply for frames sent by a STA under a block agreement. The power management subfield may be used to indicate the power management mode of a STA.

The More Data subfield may indicate to a STA in power save (PS) mode that bufferable units (Bus) are buffered for that STA at the AP. The more data subfield may be valid in individually addressed data or management frames sent (e.g., transmitted) by an AP to a STA in PS mode. The more data subfield may be set to 1 to indicate that at least one additional buffered BU is present for the STA.

The protected frame subfield may be set to 1, for example, if the frame body field contains information that has been processed by a cryptographic encapsulation algorithm. The +HTC subfield may indicate that the MAC frame contains an HT control field.

The duration/ID field of the MAC header may indicate various contents depending on frame type and subtype and the QoS capabilities of the sending STA. For example, in control frames of the power save poll (PS-Poll) subtype, the duration/ID field may carry an association identifier (AID) of the STA that sent (e.g., transmitted) the frame in the 14 least significant bits (LSB), and the two most significant bits (MSB) may be both set to 1. In other frames sent by STAs, the duration/ID field may contain a duration value (in microseconds) which may be used by a recipient to update a network allocation vector (NAV). The NAV may be a counter that indicates to a STA an amount of time during which the STA must defer from accessing the shared medium.

There may be up to four address fields in the MAC frame format. These fields may be used to indicate the basic service set identifier (BSSID), source address (SA), destination address (DA), transmitting address (TA), and receiving address (RA). Certain frames might not contain some of the address fields. Certain address field usage may be specified by the relative position of the address field (1-4) within the MAC header, independent of the type of address present in that field. For example, the address 1 field always identifies the intended receiver(s) of the frame, and the address 2 field, where present, always identifies the transmitter of the frame.

The sequence control field may comprise two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information can vary by frame type, frame subtype, and type of sending (e.g., transmitting) STA. The QoS control field is present in all data frames in which the QoS subfield of the subtype subfield is equal to 1.

The HT control field is present in QoS data, QoS null, and management frames as determined by the +HTC subfield of the frame control field. The frame body field is a variable length field that contains information specific to individual frame types and subtypes. It may comprise one or more MSDUs or MMPDUs. The minimum length of the frame body is 0 octets. The FCS field may contain a 32-bit Cyclic Redundancy Check (CRC) code. The FCS field value may be calculated over all of the fields of the MAC header and the frame body field.

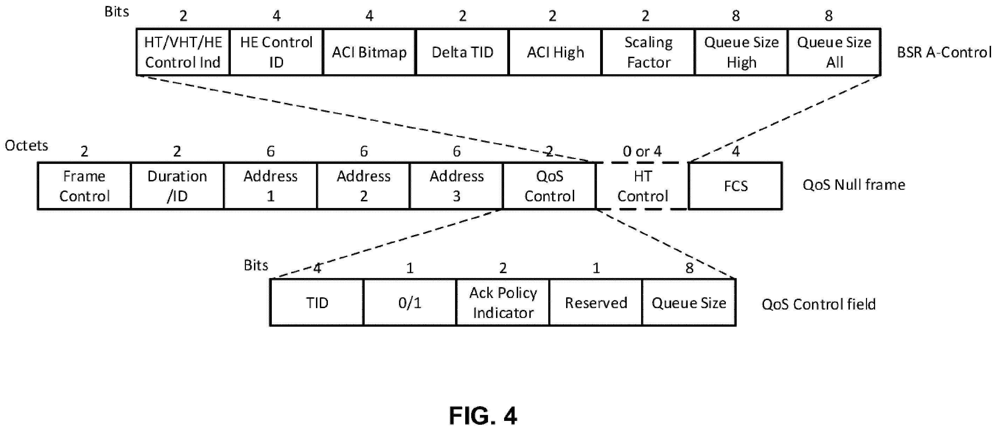

FIG. 4 shows an example of a QoS null frame indicating buffer status information. A QoS null frame refers to a QoS data frame with an empty frame body. A QoS null frame may comprise a QoS control field and an optional HT control field which may contain a buffer status report (BSR) control subfield. A QoS null frame indicating buffer status information may be sent (e.g., transmitted) by a STA to an AP.

The QoS control field may comprise a traffic identifier (TID) subfield, an ack policy indicator subfield, and a queue size subfield (or a transmission opportunity (TXOP) duration requested subfield). The TID subfield may identify the TC or TS of traffic for which a TXOP is being requested, through the setting of the TXOP duration requested or queue size subfield. The encoding of the TID subfield depends on the access policy (e.g., allowed value 0 to 7 for enhanced distributed channel access (EDCA) access policy to identify user priority for either TC or TS). The ack policy indicator subfield, together with other information, may identify the acknowledgment policy followed upon delivery of the MPDU (e.g., normal ack, implicit block ack request, no ack, block ack, etc.)

The queue size subfield may be an 8-bit field that indicates the amount of buffered traffic for a given TC or TS at the STA for transmission to the AP identified by the receiver address of the frame containing the subfield. The queue size subfield may be present in QoS null frames sent by a STA, for example, if bit 4 of the QoS control field is set to 1. The AP may use information contained in the queue size subfield to determine the TXOP (transmission opportunity) duration assigned to the STA or to determine the uplink (UL) resources assigned to the STA.

In a frame sent by or to a non-High Efficiency (non-HE) STA, the following rules may apply to the queue size value:
- The queue size value is the approximate total size, rounded up to the nearest multiple of 256 octets and expressed in units of 256 octets, of all MSDUs and A-MSDUs buffered at the STA (excluding the MSDU or A-MSDU contained in the present QoS Data frame) in the delivery queue used for MSDUs and A-MSDUs with TID values equal to the value indicated in the TID subfield of the QoS Control field;
- A queue size value of 0 is used solely to indicate the absence of any buffered traffic in the queue used for the specified TID;
- A queue size value of 254 is used for all sizes greater than 64 768 octets;
- A queue size value of 255 is used to indicate an unspecified or unknown size.

In a frame sent by an HE STA to an HE AP, the following rules may apply to the queue size value:
- The queue size value, *QS,* is the approximate total size in octets, of all MSDUs and A-MSDUs buffered at the STA (including the MSDUs or A-MSDUs contained in the same PSDU as the frame containing the queue size subfield) in the delivery queue used for MSDUs and A-MSDUs with TID values equal to the value indicated in the TID subfield of the QoS control field;
- The queue size subfield comprises a scaling factor subfield in bits B14-B15 of the QoS control field and an unscaled value, *UV*, in bits B8-B13 of the QoS control field. The scaling factor subfield provides the scaling factor, *on.*

A STA may obtain the queue size, *QS,* from a received QoS control field, which contains a scaling factor, *SF,* and an unscaled value, *UV,* as follows:
*QS* =
   16 ×*UV*, if *SF* is equal to 0;
1024 + 256 × *UV*, if *SF* is equal to 1;
17408 + 2048 × *UV*, if *SF* is equal to 2;
148480 + 32768 × *UV*, if *SF* is equal to 3 and *UV* is less than 62;
> 2147328, if *SF* equal to is 3 and *UV* is equal to 62;
*Unspecified* or *Unknown,* if *SF* is equal to 3 and *UV* is equal to 63.

The TXOP duration requested subfield, which may be included instead of the queue size subfield, may indicate the duration, in units of 32 microseconds (us), that the sending STA determines it needs for its next TXOP for the specified TID. The TXOP duration requested subfield may be set to 0 to indicate that no TXOP is requested for the specified TID in the current service period (SP). The TXOP duration requested subfield may be set to a nonzero value to indicate a requested TXOP duration in the range of 32 us to 8160 us in increments of 32 us.

The HT control field may comprise a BSR control subfield which may contain buffer status information used for UL MU operation. The BSR control subfield may be formed by a control ID, an access category index (ACI) bitmap subfield, a delta TID subfield, an ACI high subfield, a scaling factor subfield, a queue size high subfield, and a queue size all subfield of the HT control field.

The ACI bitmap subfield may indicate the access categories for which buffer status is reported (e.g., B0: best effort (AC_BE), B1: background (AC_BK), B2: video (AC_VI), B3: voice (AC_VO), etc.). Each bit of the ACI bitmap subfield may be set to 1 to indicate that the buffer status of the corresponding AC is included in the queue size all subfield, and set to 0 otherwise, except that if the ACI bitmap subfield is 0 and the delta TID subfield is 3, then the buffer status of all 8 TIDs is included.

The delta TID subfield, together with the values of the ACI bitmap subfield, may indicate the number of TIDs for which the STA is reporting the buffer status. The ACI high subfield may indicate the ACI of the AC for which the BSR is indicated in the queue size high subfield. The ACI to AC mapping is defined as ACI value 0 mapping to AC_BE, ACI value 1 mapping to AC_BK, ACI value 2 mapping to AC_VI, and ACI value 3 mapping to AC_VO. The scaling factor subfield may indicate the unit SF, in octets, of the queue size high and queue size all subfields.

The queue size high subfield may indicate the amount of buffered traffic, in units of SF octets, for the AC identified by the ACI high subfield, that is intended for the STA identified by the receiver address of the frame containing the BSR control subfield. The queue size all subfield may indicate the amount of buffered traffic, in units of SF octets, for all Acs identified by the ACI Bitmap subfield, that is intended for the STA identified by the receiver address of the frame containing the BSR control subfield.

The queue size values in the queue size high and queue size all subfields are the total sizes, rounded up to the nearest multiple of SF octets, of all MSDUs and A-MSDUs buffered at the STA (including the MSDUs or A-MSDUs contained in the same PSDU as the frame containing the BSR control subfield) in delivery queues used for MSDUs and A-MSDUs associated with AC(s) that are specified in the ACI high and ACI bitmap subfields, respectively.

A queue size value of 254 in the queue size high and queue size all subfields may indicate that the amount of buffered traffic is greater than 254 × SF octets. A queue size value of 255 in the queue size high and queue size all subfields may indicate that the amount of buffered traffic is an unspecified or unknown size. The queue size value of QoS data frames containing fragments may remain constant even if the amount of queued traffic changes as successive fragments are sent (e.g., transmitted).

MAC service may provide peer entities with the ability to exchange MSDUs. To support this service, a local MAC may use the underlying PHY-level service to transport the MSDUs to a peer MAC entity. Such asynchronous MSDU transport may be performed on a connectionless basis.

In at least some technologies, procedures for setting up a multi-AP transmission may result in situations of unsuccessful communication between a participating AP of the multi-AP transmission and one or more associated STAs. Such situations not only may cause resources shared for the multi-AP transmission to be lost but also may cause the QoS requirements of certain traffic types to be missed in the multi-AP group. Traffic types that may be particularly impacted include traffic types in which a PPDU contains one or more payloads intended for multiple users, such as broadcast traffic (single data payload intended for all users), multicast traffic (single data payload intended for multiple users), or multi-user unicast traffic (multiple payloads each intended to a respective user).

For example, a plurality of APs such as AP1, AP2, and AP3 may be part of a multi-AP group. One or more of AP1, AP2, and/or AP3 (e.g., each of AP1, AP2, and AP3) may have one or more associated STAs. The available frequency resources of the multi-AP group may be divided into a first frequency channel (CH1) and a second frequency channel (CH2). CH1 and CH2 may be non-overlapping channels. Both AP1 and AP2 may have the second frequency channel (CH2) as a primary channel.

AP1 may be the first AP (e.g., master AP) of the multi-AP group comprising AP1, AP2, AP3. For example, AP1 may obtain a TXOP making it the first AP of the multi-AP group. Also or alternatively, AP1 may be designated as the first AP by an AP controller. AP1 may decide that an upcoming TXOP shall be shared by multiple APs of the multi-AP group. The upcoming TXOP may be a TXOP obtained by AP1 or by another AP. AP1 may wish to share an obtained TXOP with AP2 and AP3. By sharing the TXOP with AP2 and AP3, AP1 may allocate a portion of the TXOP to AP2 and AP3. AP2 and AP3 may perform a multi-AP transmission during the allocated portion of the TXOP. The multi-AP transmission may or may not include a transmission by AP1.

To assign frequency channels for the allocated portion of the TXOP, AP1 may transmit an MBSRP frame on both the first and second channels (CH1) and (CH2). MBSRP frame may poll receiving APs for buffer status for a multi-AP transmission during the allocated portion of the TXOP. An AP that wishes to participate in the planned multi-AP transmission may respond to MBSRP frame by transmitting a MBSR frame to AP1. The MBSR frame may include a BSR for traffic intended to be transmitted by the AP during the multi-AP transmission. The MBSR frame may include an indication of whether the AP intends to transmit to multiple users during the multi-AP transmission. The MBSR frame may indicate whether the traffic intended for transmission during the multi-AP transmission includes broadcast traffic, multicast traffic, and/or multi-user unicast traffic.

The indication in the MBSR frame indicates whether any type of multi-user traffic is intended for transmission during the multi-AP transmission. For example, the MBSR frame may include a field that indicates whether a PPDU intended for transmission during the multi-AP transmission is a Multiple Receiver PPDU (MRP). The specific type of multi-user traffic (e.g., broadcast, multicast, multi-user unicast) may be indicated in the MBSR frame.

AP2 and AP3 may respond to the MBSRP frame by transmitting an MBSR frame each. To indicate its intent to transmit to multiple users during the multi-AP transmission, AP2 may set a MRP field of its MBSR frame to 1. AP3 may set the MRP field of its MBSR frame to 0 to indicate its intent to transmit a single user PPDU during the multi-AP transmission. The MBSRP frame may indicate the channels on which AP2 and AP3 shall respond to the MBSRP frame. AP2 may transmit its MBSR frame on the first channel (CH1), and AP3 may transmit its MBSR frame on the second channel (CH2).

AP1 may determine an assignment of frequency channel to participating APs of the planned multi-AP transmission, for example, based on receiving MBSR frames from AP2 and AP3, respectively. AP1 may determine the assignment based on the values of the MRP fields indicated in MBSR frames from AP2 and AP3, respectively. AP1 may assign AP2 its primary channel (CH2) for the multi-AP transmission based on the MRP field of its frame being set 1. AP1 may assign AP3 the first channel (CH1) (a secondary channel for AP3) for the multi-AP transmission based on the MRP field of its frame being set to 0. AP1 may receive a frame from AP1/AP2 including an indication of a primary channel. The indication of primary channel may be included in the MBSR frames from AP2 and AP3, respectively. AP1 may assume a default channel as a primary channel for an AP from which it does not receive an indication of a primary channel.

AP1 may transmit an MSA frame including the frequency channel assignment on both the first and second channels (CH1) and (CH2). AP2 and AP3 may broadcast the frequency channel assignment to their associated STAs by re-transmitting the frequency channel assignment in MSA frames, respectively, for example, based on receiving the MSA frame from AP1. AP2 and AP3 may transmit MSA frames respectively on both the first and second frequency channels (CH1) and (CH2), for example, in order to prevent OBSS STAs surrounding AP2 and AP3 on both CH1 and CH2 from accessing the channel.

Improvements described herein may provide enhanced procedures which may be used to set up a multi-AP transmission. The procedures may mitigate the situations of unsuccessful communication. The proposed procedures may reduce such situations particularly for multi-user traffic types. As such, resource utilization and QoS performance may be improved within the multi-AP group.

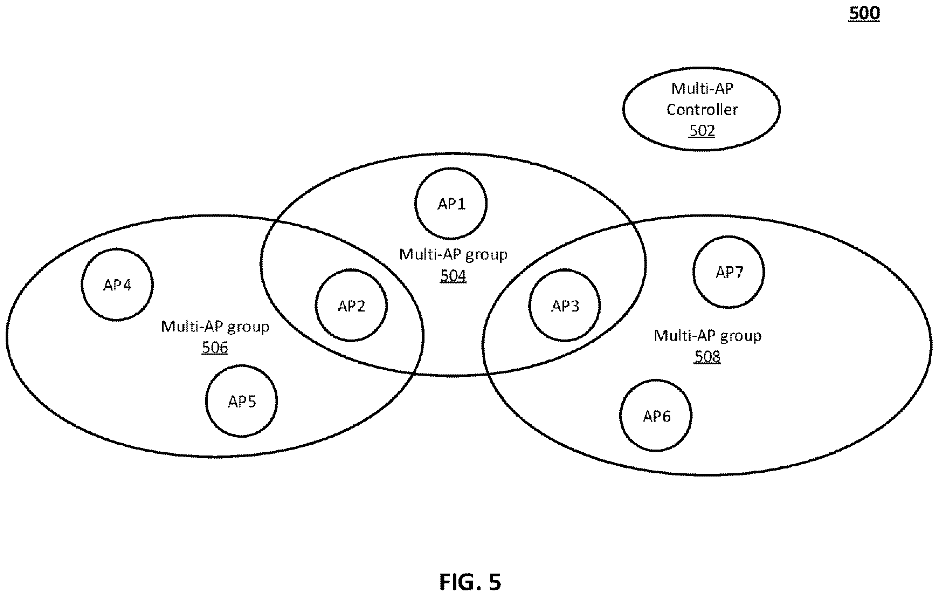

FIG. 5 shows an example of a multi-AP network. The example multi-AP network may be multi-AP network 500. Example multi-AP network 500 may be a multi-AP network in accordance with the Wi-Fi Alliance standard specification for multi-AP networks. Multi-AP network 500 may include a multi-AP controller 502 and a plurality of multi-AP groups (or multi-AP sets) 504, 506, and 508.

Multi-AP controller 502 may be a logical entity that implements logic for controlling the APs in multi-AP network 500. Multi-AP controller 502 may receive capability information and measurements from the APs and may trigger AP control commands and operations on the APs. Multi-AP controller 502 may provide onboarding functionality to onboard and provision APs onto multi-AP network 500.

Multi-AP groups 504, 506, and 508 may each include a plurality of APs. APs in a multi-AP group are in communication range of each other. The APs in a multi-AP group are may not have the same primary channel. The primary channel for an AP may refer to a default channel that the AP monitors for management frames and/or uses to transmit beacon frames. For a STA associated with an AP, the primary channel may refer to the primary channel of the AP, which may be advertised through the AP's beacon frames.

One of the APs in a multi-AP group may be designated as a first AP (e.g., master AP). The designation of the first AP may be done by AP controller 502 or by the APs of the multi-AP group. The first AP of a multi-AP group may be fixed or may change over time between the APs of the multi-AP group. An AP that is not the first AP of the multi-AP group may be known as a second AP (e.g., slave AP).

APs in a multi-AP group may coordinate with each other, including coordinating transmissions within the multi-AP group. Coordination within the multi-AP group may include coordination to perform multi-AP transmissions within the multi-AP group. A multi-AP transmission may be a transmission event in which multiple APs (of a multi-AP group or a multi-AP network) transmit simultaneously over a time period. The time period of simultaneous AP transmission may be a continuous period. The multi-AP transmission may use different transmission techniques, such as Coordinated OFDMA, Coordinated Spatial Reuse, Joint Transmission and Reception, Coordinated Beamforming and Coordinated Time Division Multiple Access (TDMA), or a combination of two or more of the aforementioned techniques.

Multi-AP group coordination may be enabled by the AP controller and/or by the first AP of the multi-AP group. The AP controller and/or the first AP may control time and/or frequency sharing in a TXOP. For example, if one of the APs (e.g., the first AP) in the multi-AP group obtains a TXOP, the AP controller and/or the first AP may control how time/frequency resources of the TXOP are to be shared with other APs of the multi-AP group. The AP of the multi-AP group that obtains a TXOP may become the first AP of the multi-AP group. The first AP may share a portion of its obtained TXOP (which may be the entire TXOP) with one or more other APs of the multi-AP group.

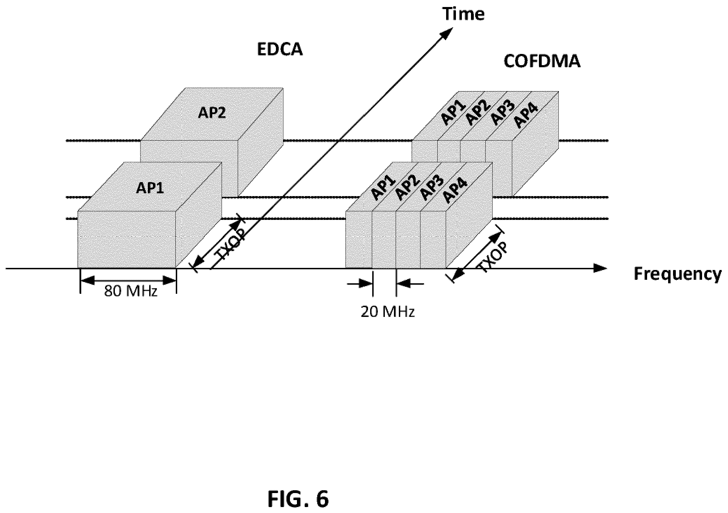

FIG. 6 shows an example of Enhanced Distributed Channel Access (EDCA) and Coordinated Orthogonal Frequency Division Multiple Access (COFDMA). In coordinated OFDMA (COFDMA), the first AP may share a portion of its TXOP with multiple APs by assigning each of the multiple APs a respective frequency resource (e.g., channel/subchannel) of available frequency resources. COFDMA may be a multi-AP channel access (e.g., such as described herein with respect to FIG. 6). In EDCA, channel access by multiple APs (e.g., AP1, AP2) may occur in consecutive time periods (e.g., TXOPs). During a given channel access, the channel (e.g., 80 MHz) in its entirety may be used by a single AP. In COFDMA, access by multiple APs (multi-AP channel access) may take place in a same time period (e.g., same TXOP or same portion of a TXOP) over orthogonal frequency resources. For example an 80 MHz channel may be divided into four non-overlapping 20 MHz channels, each assigned to a respective AP of the multiple APs. The multiple APs may transmit in a coordinated manner, simultaneously in the same time period, to achieve a multi-AP transmission. In the multi-AP transmission, each of the multiple APs may transmit a PPDU to one or more computing devices (e.g., wireless devices and/or STAs).

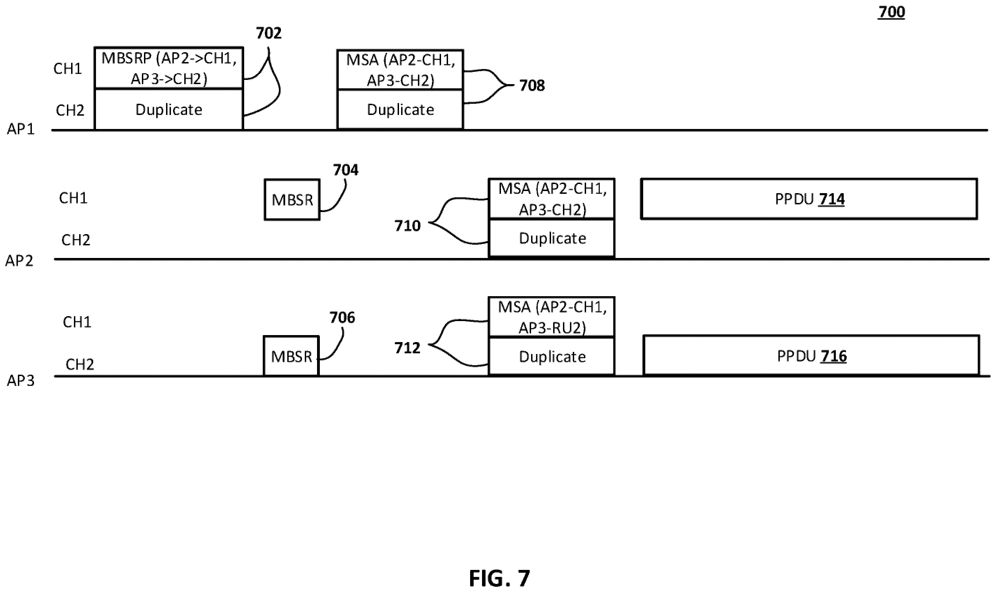

FIG. 7 shows an example procedure for setting up a multi-AP transmission. Time/frequency resources may need to be shared with (or allocated to) the participating Aps, for example, before a multi-AP transmission can be performed. FIG. 7 shows an example pro700 of a procedure which may be used to set up a multi-AP transmission, such as a COFDMA transmission. Example 700 includes a plurality of APs, AP1, AP2, and AP3. AP1, AP2, and AP3 may be part of a multi-AP group. One or more of AP1, AP2, and/or AP3 (e.g., each of AP1, AP2, and/or AP3) may have one or more associated computing devices (e.g., wireless devices and/or STAs) (not shown in FIG. 7). The available frequency resources of the multi-AP group may be divided into a first frequency channel (CH1) and a second frequency channel (CH2). CH1 and CH2 may be non-overlapping channels. The primary channels of AP1, AP2, AP3 may be either CH1 or CH2.

AP1 may be the first AP (e.g., master AP) of the multi-AP group comprising AP1, AP2, AP3. For example, AP1 may obtain a TXOP making it the first AP of the multi-AP group. Also or alternatively, AP1 may be designated as the first AP, manually by a human administrator (e.g., through a user interface of AP1) and/or by an AP controller. AP1 may decide that an upcoming TXOP shall be shared by multiple APs of the multi-AP group. The upcoming TXOP may be a TXOP obtained by AP1 or by another AP. That AP1 may wish to share an obtained TXOP with AP2 and AP3. By sharing the TXOP with AP2 and AP3, AP1 may allocate a portion of the TXOP to AP2 and AP3. AP2 and AP3 may perform a multi-AP transmission during the allocated portion of the TXOP. The multi-AP transmission may or may not include a transmission by AP1.

AP1 may assign the available first and second frequency channels (CH1) and (CH2) to AP2 and AP3 for the allocated portion of the TXOP. AP1 may transmit a multi-AP Buffer Status Report Poll (MBSRP) frame 702 on one or more of the first and second channels (CH1) and (CH2). MBSRP frame 702 may poll receiving APs for buffer status for a multi-AP transmission during the allocated portion of the TXOP. An AP that wishes to participate in the planned multi-AP transmission may respond to MBSRP frame 702 by transmitting a multi-AP buffer status report (MBSR) frame to AP1. The MBSR frame may include a buffer status report (BSR) for traffic intended to be transmitted by the AP during the multi-AP transmission. In example 700, AP2 and AP3 may respond to MBSRP frame 702 by transmitting MBSR frames 704 and 706, respectively. MBSRP frame 702 may indicate the channels on which AP2 and AP3 shall respond to MBSRP frame 702. AP2 may transmit MBSR frame 704 on the first channel (CH1), and/or AP3 may transmit MBSR frame 706 on the second channel (CH2).

AP1 may determine an assignment of frequency channel to participating APs of the planned multi-AP transmission, for example, based on receiving MBSR frames 704 and 706. In example 700, AP1 may assign the first channel (CH1) to AP2 and the second channel (CH2) to AP3. In making the channel assignment, AP1 may freely assign the channels to AP2 and AP3, without regard to the primary channels of AP2 and AP3. AP1 may transmit a multi-AP schedule announcement (MSA) frame 708 including the frequency channel assignment on both the first and second channels (CH1) and (CH2).

AP2 and AP3 may broadcast the frequency channel assignment to their associated computing devices (e.g., wireless devices and/or STAs) by re-transmitting the frequency channel assignment in MSA frames 710 and 712, respectively, for example, based on receiving MSA frame 708. In order to prevent OBSS STAs surrounding AP2 and AP3 on both CH1 and CH2 from accessing the channel, AP2 and AP3 may transmit MSA frames 710 and 712 respectively on both the first and second frequency channels (CH1) and (CH2).

AP2 and AP3 may proceed to participate in the multi-AP transmission during the allocated portion of the TXOP. AP2 may transmit a PPDU 714 on the first channel (CH1). Simultaneously, AP3 may transmit a PPDU 716 on the second channel (CH2).

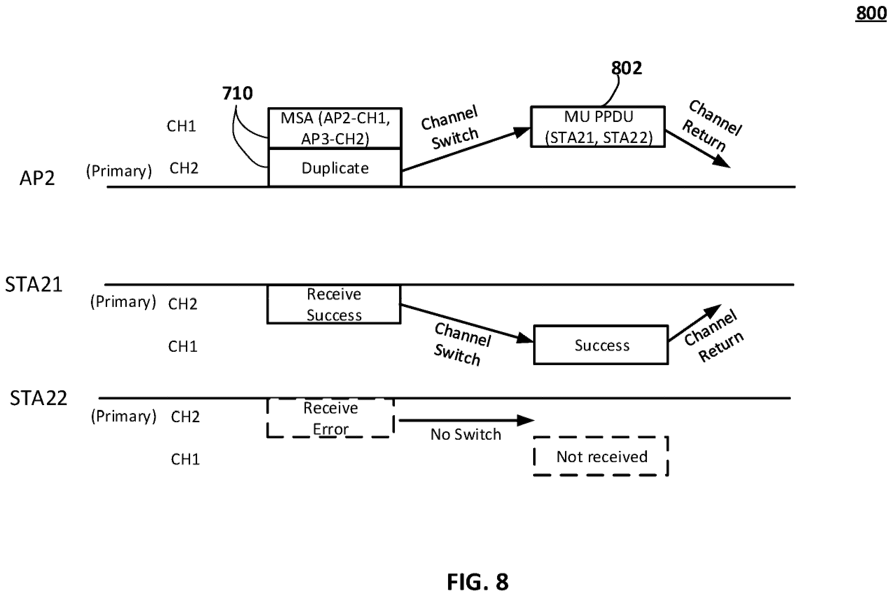

FIG. 8 shows an example multi-AP transmission setup. FIG. 8 shows an example 800. Example 800 may follow example 700 described above, for example, after AP2 transmits MSA frame 710 on the first and second frequency channels (CH1) and (CH2) to its associated computing devices (e.g., wireless devices and/or STAs). AP2 may use the second channel (CH2) as a primary channel. AP2 may have two associated STAs, STA21 and STA22. Upon association with AP2, STA21 and STA22 may use the second channel (CH2) as a primary channel.

AP2 may switch from its primary channel (CH2) to the first channel (CH1) allocated in MSA frame 708, for example, after transmitting MSA frame 710. STA21, operating on the second channel (CH2), may receive MSA frame 710. STA21 may read the frequency channel assignment contained in MSA frame 710 and, for example, based on AP2 being assigned the first channel (CH1) in the frequency channel assignment, may switch its operating channel from its primary channel (CH2) to the first channel (CH1). STA22, also operating on the second channel (CH2), may fail to receive or receive MSA frame 710 in error. The unsuccessful/erroneous reception of MSA frame 710 by STA22 may be due to high interference, for example. STA22 may perform no switching of operating channel and may continue to operate on its primary channel (CH2).

For example, not knowing that STA22 did not switch to the second channel (CH2), AP2 may proceed to transmit a multi-user (MU) PPDU 802 to STAs 21 and STA22 on the first channel (CH1). MU PPDU 802 may include a respective MPDU or Aggregate MPDU (AMPDU) for each of STA21 and STA22. MU PPDU 802 may be part of a multi-AP transmission in the multi-AP group (AP1, AP2, AP3), for example, such as described with respect to FIG. 7. AP2 may return to its primary channel (CH2) after transmitting MU PPDU 802.

Having switched to the first channel (CH1), STA21 may successfully receive MU PPDU 802 and/or may be able to decode its respective MPDU or AMPDU contained in MU PPDU 802. STA21 may return to its primary channel (CH2) after receiving MU PPDU 802. STA22 may fail to receive MU PPDU 802, remaining on the second channel (CH2) due to its failure to receive MSA frame 710.

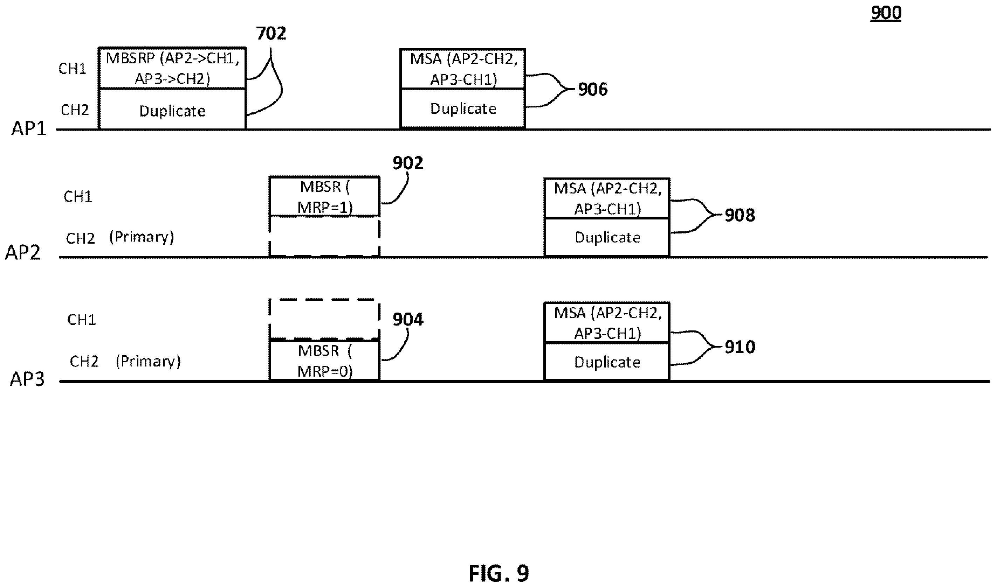

FIG. 9 shows an example procedure for setting up a multi-AP transmission. FIG. 9 shows an example 900. Example 900 includes a plurality of APs, AP1, AP2, and AP3 (e.g., such as described with respect to FIG. 7). AP1, AP2, and AP3 may be part of a multi-AP group. One or more of AP1, AP2, and/or AP3 (e.g., each of AP1, AP2, and AP3) may have one or more associated computing devices (e.g., wireless devices and/or STAs) (not shown in FIG. 9). The available frequency resources of the multi-AP group may be divided into a first frequency channel (CH1) and a second frequency channel (CH2). CH1 and CH2 may be non-overlapping channels. Both AP1 and AP2 may have the second frequency channel (CH2) as a primary channel.

AP1 may be the first AP (e.g., master AP) of the multi-AP group comprising AP1, AP2, AP3. For example, AP1 may obtain a TXOP making it the first AP of the multi-AP group. Also or alternatively, AP1 may be designated as the first AP by an AP controller. AP1 may decide that an upcoming TXOP shall be shared by multiple APs of the multi-AP group. The upcoming TXOP may be a TXOP obtained by AP1 or by another AP. AP1 may wish to share an obtained TXOP with AP2 and AP3. By sharing the TXOP with AP2 and AP3, AP1 may allocate a portion of the TXOP to AP2 and AP3. AP2 and AP3 may perform a multi-AP transmission during the allocated portion of the TXOP. The multi-AP transmission may or may not include a transmission by AP1.

To assign frequency channels for the allocated portion of the TXOP, AP1 may transmit an MBSRP frame 702 on both the first and second channels (CH1) and (CH2). MBSRP frame 702 may poll receiving APs for buffer status for a multi-AP transmission during the allocated portion of the TXOP. An AP that wishes to participate in the planned multi-AP transmission may respond to MBSRP frame 702 by transmitting a MBSR frame to AP1. The MBSR frame may include a BSR for traffic intended to be transmitted by the AP during the multi-AP transmission. The MBSR frame may include an indication of whether the AP intends to transmit to multiple users during the multi-AP transmission. The MBSR frame may indicate whether the traffic intended for transmission during the multi-AP transmission includes broadcast traffic, multicast traffic, and/or multi-user unicast traffic.

The indication in the MBSR frame indicates whether any type of multi-user traffic is intended for transmission during the multi-AP transmission. For example, the MBSR frame may include a field that indicates whether a PPDU intended for transmission during the multi-AP transmission is a Multiple Receiver PPDU (MRP). The specific type of multi-user traffic (e.g., broadcast, multicast, multi-user unicast) may be indicated in the MBSR frame.

AP2 and AP3 may respond to MBSRP frame 702 by transmitting MBSR frames 902 and 904, respectively. To indicate its intent to transmit to multiple users during the multi-AP transmission, AP2 may set a MRP field of MBSR frame 902 to 1. AP3 may set the MRP field of frame 904 to 0 to indicate its intent to transmit a single user PPDU during the multi-AP transmission. MBSRP frame 702 may indicate the channels on which AP2 and AP3 shall respond to MBSRP frame 702. AP2 may transmit MBSR frame 902 on the first channel (CH1), and AP3 may transmit MBSR frame 904 on the second channel (CH2).

AP1 may determine an assignment of frequency channel to participating APs of the planned multi-AP transmission, for example, based on receiving MBSR frames 902 and 904. AP1 may determine the assignment based on the values of the MRP fields indicated in MBSR frame 902 and 904. AP1 may assign AP2 its primary channel (CH2) for the multi-AP transmission based on the MRP field of frame 902 being set 1. AP1 may assign AP3 the first channel (CH1) (a secondary channel for AP3) for the multi-AP transmission based on the MRP field of frame 904 being set to 0AP1 may receive a frame from AP1/AP2 including an indication of a primary channel. The indication of primary channel may be included in MBSR frames 902 and 904. AP1 may assume a default channel as a primary channel for an AP from which it does not receive an indication of a primary channel.

AP1 may transmit an MSA frame 906 including the frequency channel assignment on both the first and second channels (CH1) and (CH2). AP2 and AP3 may broadcast the frequency channel assignment to their associated STAs by re-transmitting the frequency channel assignment in MSA frames 908 and 910, respectively, for example, based on receiving MSA frame 906. AP2 and AP3 may transmit MSA frames 908 and 910 respectively on both the first and second frequency channels (CH1) and (CH2), for example, in order to prevent OBSS STAs surrounding AP2 and AP3 on both CH1 and CH2 from accessing the channel.

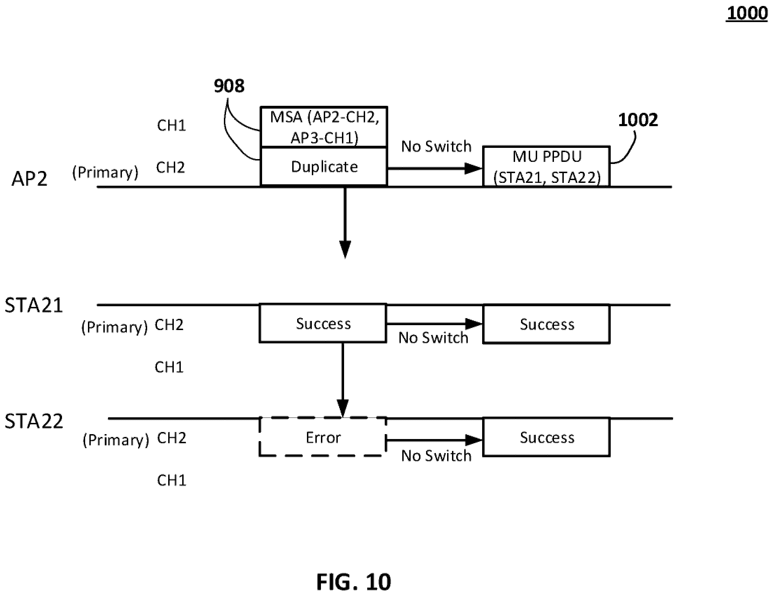

FIG. 10 shows an example transmission of a multi-AP transmission setup. AP2 and AP3 may proceed to participate in the multi-AP transmission during the allocated portion of the TXOP, for example, such as described with respect to FIG. 9. FIG. 10 shows an example 1000 of a transmission of a multi-AP transmission setup. Example 1000 may follow example 900 described above, for example, after AP2 transmits MSA frame 908 on the first and second frequency channels (CH1) and (CH2) to its associated computing devices (e.g., wireless devices and/or STAs). AP2 may use the second channel (CH2) as a primary channel. AP2 may have two associated STAs, STA21 and STA22. STA21 and STA22 use the second channel (CH2) as a primary channel, for example, based on association with AP2.

As AP2 may be assigned its primary channel (CH2) by MSA frame 906, AP2 may not need to switch channels for the multi-AP transmission after transmitting MSA frame 908. STA21, operating on its primary channel (CH2), may successfully receive MSA frame 908 transmitted on the second channel (CH2). STA21 may read the frequency channel assignment contained in MSA frame 908 and, for example, based on AP2 being assigned the second channel (CH2) in the frequency channel assignment, may continue to operate on its primary channel (CH2). STA22, operating on its primary channel (CH2), may fail to receive or receive MSA frame 908 in error. The unsuccessful/erroneous reception of MSA frame 908 by STA22 may be due to high interference, for example. STA22 may perform no switching of operating channel and continues to operate on its primary channel (CH2).

AP2 may proceed to transmit a MU PPDU 1002 to STAs 21 and STA22 on the second channel (CH2) in accordance with the frequency channel assignment. MU PPDU 1002 may include a respective MPDU or AMPDU for each of STA21 and STA22. As both STA21 and STA22 continued to operate on their primary channel (CH2), STA21 and STA22 may successfully receive MU PPDU 1002 and may be able to decode their respective MPDU or AMPDU contained in MU PPDU 1002.

The procedure shown in example 900 may allow AP2 to continue to operate on its primary channel for the multi-AP transmission. Even when one or more associated STAs of AP2 fail to receive the frequency channel assignment for the multi-AP transmission, the one or more associated STAs have a higher chance of receiving the subsequent transmission of AP2 during the multi-AP transmission. This may be particularly significant when the transmission of AP2 during the multi-AP transmission is intended to multiple users.

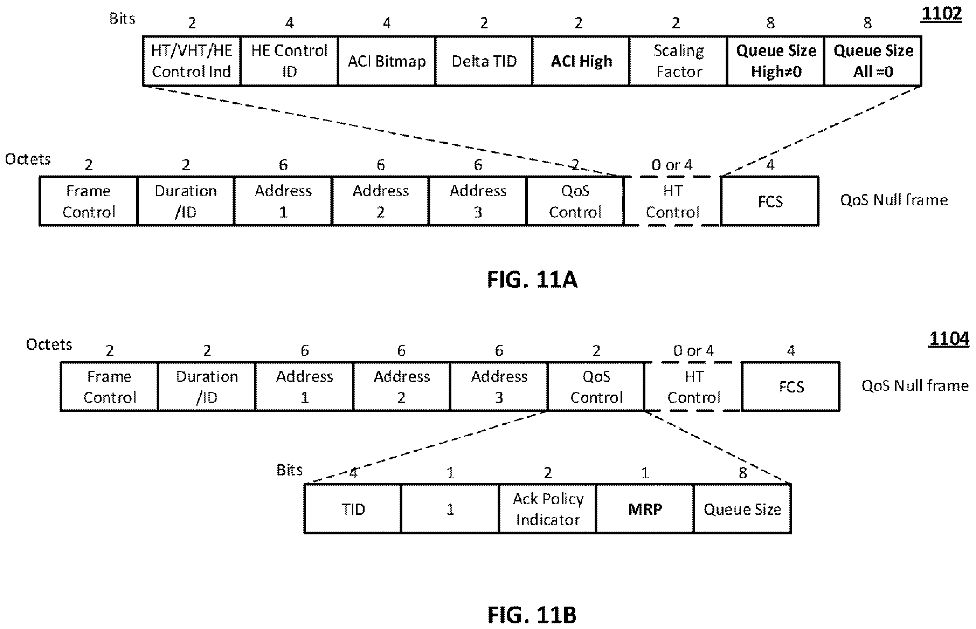

FIGS. 11A-11B show example frames which may be used by an AP to signal its intent to transmit to multiple users during a multi-AP transmission. FIGS. 11A-11B show example frames 1102 and 1104. Example frames may be used by an AP to signal its intent to transmit to multiple users during a multi-AP transmission.. Example frames 1102 and 1104 may be MBSR frames 902 and 904 (e.g., such as described with respect to FIG. 9).

Frames 1102 and 1104 may be QoS null frames. A QoS null frame may refer to a QoS data frame with an empty frame body (e.g., such as described with respect to FIG 4). A QoS null frame may include, among other fields, a QoS control field and an HT control field. The QoS control field and/or the HT control field may include a BSR. Frames 1102 and 1104 may be QoS data frames, including similar fields as QoS null frames.

According to frame 1102, the ACI High, Queue Size High, and Queue Size All subfields of the HT Control field of a QoS null frame may be used by an AP to signal its intent to transmit to multiple users. The ACI High subfield may indicate the ACI whose BSR is indicated in the Queue Size High subfield (e.g., such as described with respect to FIG. 4). The Queue Size High subfield may indicate the amount of buffered traffic (e.g., in units of SF octets) for the ACI identified by the ACI High subfield, for example, that is intended for the computing device (e.g., wireless device and/or STA) identified by the receiver address of the frame. The Queue Size All subfield may indicate the amount of buffered traffic (e.g., in units of SF octets) for all ACs identified by the ACI Bitmap subfield (of the HT Control field), that is intended for the STA identified by the receiver address of the frame. To signal the AP's intent to transmit to multiple users, the Queue Size High subfield may be set to a non-zero value and the Queue Size All subfield may be set to 0. The value of the Queue Size All subfield may be either equal to or larger than the value of the Queue Size High subfield. Hence, when the Queue Size All subfield is less than Queue Size High subfield, it indicates a positive Multiple Receiver PPDU (MRP) condition wherein the AP intends to transmit to multiple users either by transmitting a broadcast frame, a multi-cast frame, or an MU PPDU. A second AP (e.g., slave AP) that transmits an MBSR according to frame 1102 may indicate the queue size for the MRP transmission in the Queue Size High subfield of frame 1102.

In frame 1104, the QoS control field of the QoS null frame may be used by an AP to signal its intent to transmit to multiple users. A reserved bit of the QoS control field may be designated as the MRP field. The MRP field may be set to 1 by an AP to indicate its intent to transmit to multiple users.

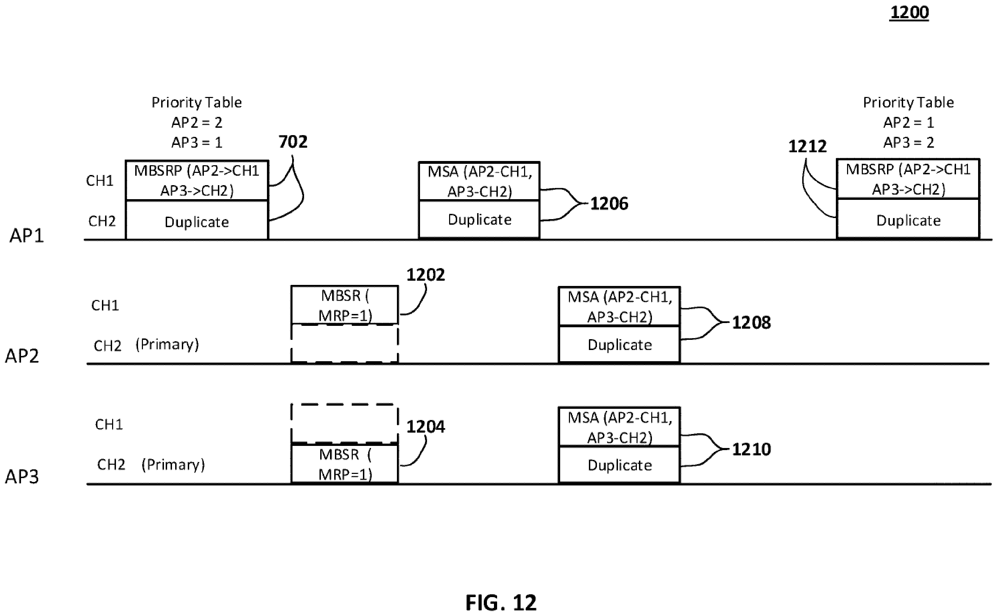

FIG. 12 shows an example procedure for setting up a multi-AP transmission. FIG. 12 shows an example 1200 procedure for setting up a multi-AP Example 1200 includes a plurality of APs, AP1, AP2, and AP3. AP1, AP2, and AP3 may be part of a multi-AP group. One or more of AP1, AP2, and/or AP3 (e.g., each of AP1, AP2, and AP3) may have one or more associated STAs (not shown in FIG. 12). The available frequency resources of the multi-AP group may be divided into a first frequency channel (CH1) and a second frequency channel (CH2). CH1 and CH2 may be non-overlapping channels. One or both AP1 and AP2 have the second frequency channel (CH2) as a primary channel.

AP1 may be the first AP (e.g., master AP) of the multi-AP group comprising AP1, AP2, AP3. For example, AP1 may obtain a TXOP making it the first AP of the multi-AP group. Alternatively, AP1 may be designated as the first AP by an AP controller. AP1 may decide that an upcoming TXOP shall be shared by multiple APs of the multi-AP group. The upcoming TXOP may be a TXOP obtained by AP1 or by another AP. AP1 may wish to share an obtained TXOP with AP2 and AP3. By sharing the TXOP with AP2 and AP3, AP1 may allocate a portion of the TXOP to AP2 and AP3. AP2 and AP3 may perform a multi-AP transmission during the allocated portion of the TXOP. The multi-AP transmission may or may not include a transmission by AP1.

To assign frequency channels for the allocated portion of the TXOP in example 1200, AP1 may transmit an MBSRP frame 702 on both the first and second channels (CH1) and (CH2). MBSRP frame 702 may poll receiving APs for buffer status for a multi-AP transmission during the allocated portion of the TXOP. An AP that wishes to participate in the planned multi-AP transmission responds to MBSRP frame 702 by transmitting a MBSR frame to AP1. The MBSR frame may include a BSR for traffic intended to be transmitted by the AP during the multi-AP transmission. The MBSR frame may include an indication of whether the AP intends to transmit to multiple users during the multi-AP transmission.

The indication in the MBSR frame indicates whether any type of multi-user traffic is intended for transmission during the multi-AP transmission. For example, the MBSR frame may include a field that indicates whether a PPDU intended for transmission during the multi-AP transmission is a Multiple Receiver PPDU (MRP). The specific type of multi-user traffic (e.g., broadcast, multicast, multi-user unicast) may be indicated in the MBSR frame.

One or both of AP2 and AP3 may intend to transmit to multiple users during the multi-AP transmission. AP2 and AP3 may respond to MBSRP frame 702 by transmitting MBSR frames 1202 and 1204, respectively, with each of frames 1202 and 1204 including an MRP field set to 1. MBSRP frame 702 may indicate the channels on which AP2 and AP3 shall respond to MBSRP frame 702. AP2 may transmit MBSR frame 1202 on the first channel (CH1), and/or AP3 may transmit MBSR frame 1304 on the second channel (CH2).

AP1 may determine an assignment of frequency channel to participating APs of the planned multi-AP transmission, for example, based on receiving MBSR frames 1202 and 1204. AP1 may determine the assignment by first considering the values of the MRP fields indicated in MBSR frames 1202 and 1204. The transmitting AP of the MBSR frame may be assigned its primary channel for the multi-AP transmission, for example, if only one of the received MBSR frames includes an MRP field set to 1. If not, for example, then AP1 may use other tie-breaking rules to determine which of the APs intending to transmit to multiple users during the multi-AP transmission is assigned its primary channel for the multi-AP transmission. The first AP (AP1 in example 1200) may maintain a priority table according to which each second (e.g., slave) AP (AP2 and AP3 in example 1200) is assigned a priority value. The lower the priority value is the higher the priority level is of the corresponding AP to be assigned its primary channel. For example, at the time of transmission of frame MBSRP frame 702, AP2 may have a priority value of 2 and AP3 has a priority value of 1. AP3 may have a higher priority level than AP2, and, for example, if both MBSR frames 1202 and 1204 are received with the MRP field set to 1, AP1 may assign AP3 its primary channel (CH2) and AP2 the first channel (CH1) (a secondary channel for AP2) for the multi-AP transmission. AP1 may receive a frame from AP1/AP2 including an indication of a primary channel. The indication of primary channel may be included in MBSR frames 1202 and 1204. AP1 may assume a default channel as a primary channel for an AP from which it does not receive an indication of a primary channel.

AP1 may transmit an MSA frame 1206 including the frequency channel assignment on both the first and second channels (CH1) and (CH2). AP2 and AP3 may broadcast the frequency channel assignment to their associated computing devices (e.g., wireless devices and/or STAs) by re-transmitting the frequency channel assignment in MSA frames 1208 and 1210, respectively, for example, based on receiving MSA frame 1206. In order to prevent OBSS STAs surrounding AP2 and AP3 on both CH1 and CH2 from accessing the channel, AP2 and AP3 may transmit MSA frames 1208 and 1210 respectively on both the first and second frequency channels (CH1) and (CH2). AP2 and AP3 may proceed to participate in the multi-AP transmission during the allocated portion of the TXOP.

The priority table may be fixed or dynamic. For example, the priority table may be fixed when the first AP of the multi-AP group is fixed and/or dynamic when the first AP is dynamic. The priority table may be fixed or dynamic irrespective of whether the first AP is fixed or dynamic. The priority table may be dynamically updated by the first AP. For example, the first AP may update the priority table for one or more planned multi-AP transmission (e.g., each planned multi-AP transmission). The priority table may change at transmission of a MBSRP frame 1212 for a multi-AP transmission.

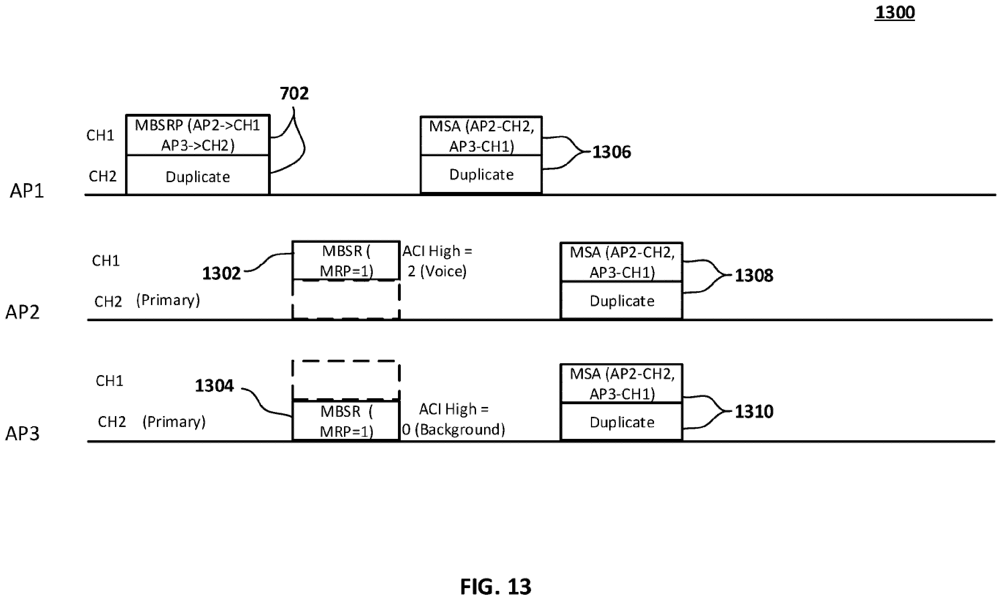

FIG. 13 shows an example procedure for setting up a multi-AP transmission. FIG. 13 shows an example 1300 of a procedure for setting up a multi-AP transmission. Example 1300 includes a plurality of APs, AP1, AP2, and/or AP3 (e.g., such as described with respect to FIG. 7). AP1, AP2, and/or AP3 may be part of a multi-AP group. AP1, AP2, and/or AP3 may have one or more associated STAs (not shown in FIG. 13). The available frequency resources of the multi-AP group may be divided into a first frequency channel (CH1) and a second frequency channel (CH2). CH1 and CH2 may be non-overlapping channels. AP1 and AP2 may have the second frequency channel (CH2) as a primary channel.

AP1 may be the first AP (e.g., master AP) of the multi-AP group comprising AP1, AP2, AP3. For example, AP1 may obtain a TXOP making it the first AP of the multi-AP group. AP1 may be designated as the first AP by an AP controller. AP1 may decide that an upcoming TXOP shall be shared by multiple APs of the multi-AP group. The upcoming TXOP may be a TXOP obtained by AP1 or by another AP. AP1 may wish to share an obtained TXOP with AP2 and/or AP3. By sharing the TXOP with AP2 and/or AP3, AP1 may allocate a portion of the TXOP to AP2 and/or AP3. AP2 and/or AP3 may perform a multi-AP transmission during the allocated portion of the TXOP. The multi-AP transmission may or may not include a transmission by AP1.

To assign frequency channels for the allocated portion of the TXOP, AP1 may transmit an MBSRP frame 702 on the first and/or second channels (CH1) and (CH2). MBSRP frame 702 may poll receiving APs for buffer status for a multi-AP transmission during the allocated portion of the TXOP. An AP that wishes to participate in the planned multi-AP transmission may respond to MBSRP frame 702 by transmitting a MBSR frame to AP1. The MBSR frame may include a BSR for traffic intended to be transmitted by the AP during the multi-AP transmission. The MBSR frame may include an indication of whether the AP intends to transmit to multiple users during the multi-AP transmission.

The indication in the MBSR frame may indicate whether any type of multi-user traffic is intended for transmission during the multi-AP transmission. For example, the MBSR frame may include a field that indicates whether a PPDU intended for transmission during the multi-AP transmission is a Multiple Receiver PPDU (MRP). The specific type of multi-user traffic (e.g., broadcast, multicast, multi-user unicast) may be indicated in the MBSR frame.

AP2 and/or AP3 may intend to transmit to multiple users during the multi-AP transmission. AP2 and/or AP3 may respond to MBSRP frame 702 by transmitting MBSR frames 1302 and 1304, respectively, with each of frames 1302 and 1304 including an MRP field set to 1. MBSRP frame 702 may indicate the channels on which AP2 and/or AP3 shall respond to MBSRP frame 702 (e.g., such as described with respect to FIG. 7). AP2 may transmit MBSR frame 1302 on the first channel (CH1), and AP3 may transmit MBSR frame 1304 on the second channel (CH2).

AP1 may determine an assignment of frequency channel to participating APs of the planned multi-AP transmission, for example, based on receiving MBSR frames 1302 and 1304. AP1 may determine the assignment by considering the values of the MRP fields indicated in MBSR frames 1302 and 1304. The transmitting AP of the MBSR frame may be assigned its primary channel for the multi-AP transmission, for example, if only one of the received MBSR frames includes an MRP field set to 1. If not, AP1 may use other tie-breaking rules to determine which of the APs intending to transmit to multiple users during the multi-AP transmission is assigned its primary channel for the multi-AP transmission. The first AP may assign the AP indicating the highest ACI High subfield value among the received MBSR frames its primary channel for the multi-AP transmission. For example, MBSR frame 1302 received from AP2 may include an ACI High subfield set to 2

(corresponding to Voice traffic), and/or MBSR frame 1304 received from AP3 may include an ACI High subfield set to 0 (corresponding to Background traffic). AP1 may assign AP2 its primary channel (CH2) and AP3 the first channel (CH1) (a secondary channel for AP3) for the multi-AP transmission. The first AP may, alternatively or additionally, use other indicated subfield values of the received MBSR frames in determining primary channel assignment priority. For example, the first AP may use the TID subfield values and/or the Queue Size subfield values (of the QoS Control field) of the received MBSR frames in determining primary channel assignment priority. The first AP may rely on one or more of these other subfield values in the event of a tie in the ACI High subfield values among received MBSR frames.

AP1 may receive a frame from AP1/AP2 including an indication of a primary channel. The indication of primary channel may be included in MBSR frames 1302 and 1304. AP1 may assume a default channel as a primary channel for an AP from which it does not receive an indication of a primary channel.

AP1 may transmit an MSA frame 1306 including the frequency channel assignment on the first and/or second channels (CH1) and (CH2). AP2 and AP3 may broadcast the frequency channel assignment to their associated computing devices (e.g., wireless devices and/or STAs) by re-transmitting the frequency channel assignment in MSA frames 1308 and 1310, respectively. In order to prevent OBSS STAs surrounding AP2 and/or AP3 on CH1 and/or CH2 from accessing the channel, AP2 and/or AP3 may transmit MSA frames 1308 and 1310 respectively on the first and/or second frequency channels (CH1) and (CH2). AP2 and/or AP3 may proceed to participate in the multi-AP transmission during the allocated portion of the TXOP.

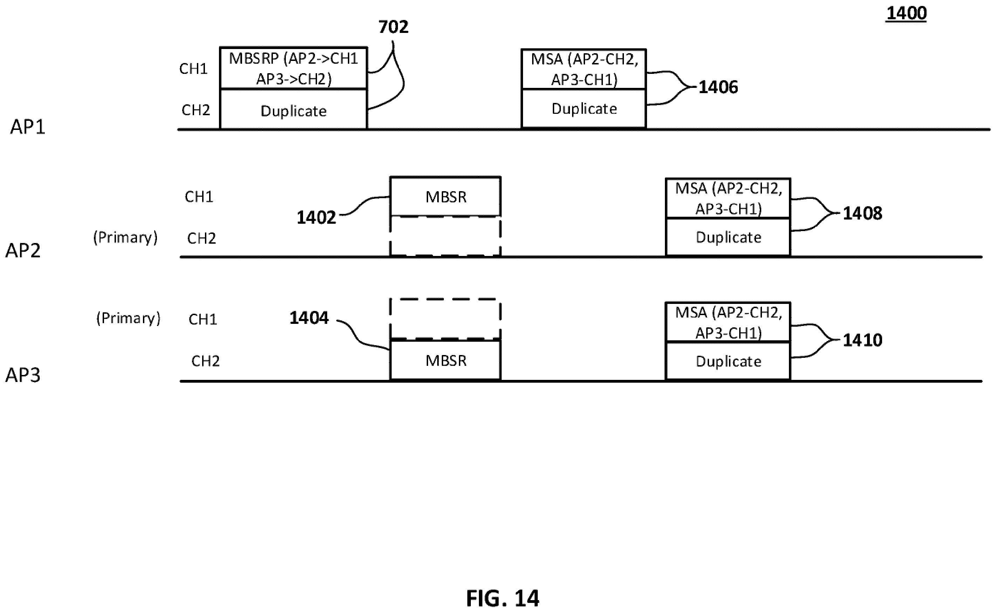

FIG. 14 shows an example procedure for setting up a multi-AP transmission. FIG. 14 shows an example 1400 of a procedure for setting up a multi-AP transmission. Example 1400 includes a plurality of APs, AP1, AP2, and AP3. AP1, AP2, and/or AP3 may be part of a multi-AP group. One or more of AP1, AP2, and AP3 (e.g., each of AP1, AP2, and/or AP3) may have one or more associated computing devices (e.g., wireless devices and/or STAs) (not shown in FIG. 14). The available frequency resources of the multi-AP group may be divided into a first frequency channel (CH1) and a second frequency channel (CH2). CH1 and CH2 may be non-overlapping channels.

Example 1400 may include, for example, prior to the operations shown in FIG. 14, one or more acts (not shown in FIG. 14) to enable APs of the multi-AP group to operate on different primary channels. The one or more acts may cause all APs of the multi-AP to operate on different primary channels. The one or more acts may cause only second Aps (e.g., slave APs) to operate on distinct primary channels.

The one or more acts may include an AP of the multi-AP group being configured to determine/select a primary channel based on monitoring/listening to beacon frames from other APs in the multi-AP group. The AP may be any AP of the multi-AP group or a second AP (e.g., slave AP). The AP may select as a primary channel a channel that is different than a frequency channel on which a beacon frame from another AP of the multi-AP group is received.

The one or more acts may include an AP transmitting a frame (e.g., beacon frame) comprising an indication of a selected primary channel. The primary channel may have been selected by the AP itself (e.g., such as described above herein). A first AP of the multi-AP group, and/or an AP controller, may receive the frame comprising the indication of the primary channel of the AP. The first AP, and/or the AP controller, may determine whether the primary channel selected by the AP is distinct from a confirmed primary channel of another AP of the multi-AP group. The confirmed primary channel of the other AP refers to a primary channel approved by the first AP, and/or the AP controller, for use by the other AP during the multi-AP transmission.

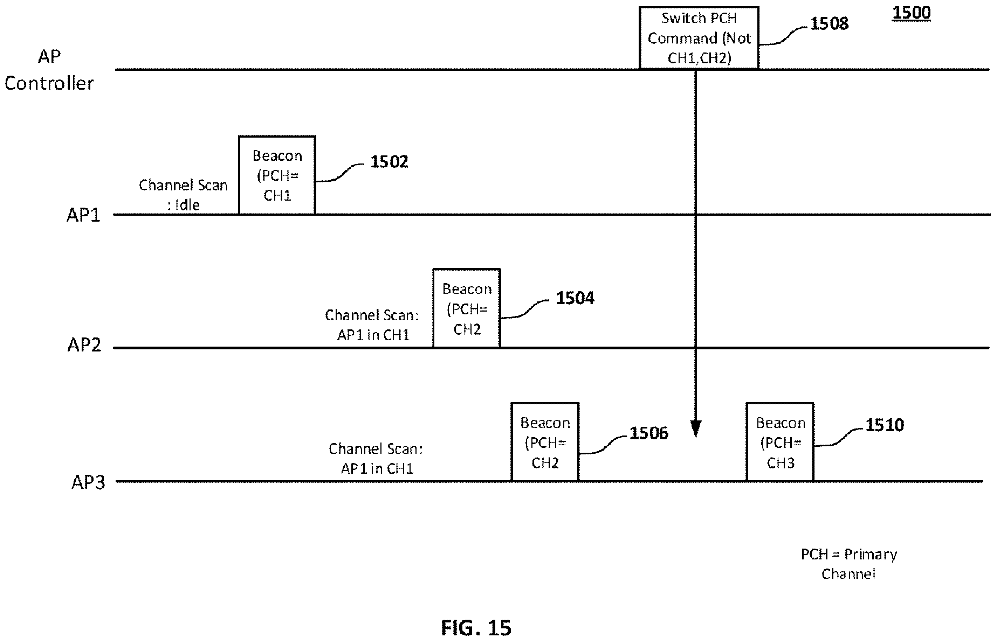

FIG. 15 shows an example procedure for setting up a multi-AP group. FIG. 15 shows an example 1500 of a procedure, which may be used separately from or in combination with the example procedure described with respect to FIG. 14. The procedure illustrated in example 1500 may be an embodiment of the one or more acts to enable APs of the multi-AP group to operate on different primary channels. Example 1500 may include an AP controller and a plurality of APs, AP1, AP2, and AP3. AP1, AP2, and/or AP3 may be part of a multi-AP group. One or more of AP1, AP2, and/or AP3 (e.g., each of AP1, AP2, and/or AP3) may have one or more associated STAs (not shown in FIG. 15). The available frequency resources of the multi-AP group may be divided into at least a first frequency channel (CH1) and a second frequency channel (CH2). CH1 and CH2 may be non-overlapping channels.

Example 1500 may include a process by which APs of a multi-AP group may select primary channels. Example 1500 may begin with AP1 performing a scan of available channels. The channel scan may include at least the first frequency channel (CH1) and the second frequency channel (CH2). The channel scan may reveal that the first frequency channel (CH1) and/or the second frequency channel (CH2) are idle. AP1 may select, for example, based on the determination, one of the idle channels (e.g., CH1 in example 1500) as a primary channel. AP1 may proceed to transmit a frame 1502 including an indication of the selected primary channel (CH1). Frame 1502 may be a beacon frame. AP1 may transmit frame 1502 on the indicated/selected primary channel (CH1).

Frame 1502 may be received by the AP controller, AP2, and/or AP3. The AP controller may verify that the primary channel (CH1) indicated by AP1 does not conflict with a confirmed primary channel of another AP of the multi-AP group, for example, based on receiving frame 1502. The AP controller may set the first frequency channel (CH1) as a confirmed primary channel for AP1, for example, if the first frequency channel (CH1) indicated in frame 1502 does not conflict with a confirmed primary channel selection of another AP of the multi-AP group. For example, where AP1 is the first AP, the primary channel selection of AP1 may override a confirmed primary channel selection of another AP of the multi-AP group. The AP controller may instruct the AP with a conflicting selection to modify its primary channel.

AP2 may receive frame 1502 while performing a channel scan ahead of selecting a primary channel. AP2 may select as a primary channel a frequency channel that is different from the first frequency channel (CH1), for example, based on receiving frame 1502 on the first frequency channel (CH1). AP2 may select the second frequency channel (CH2) as a primary channel. AP2 may proceed to transmit a frame 1504 including an indication of the selected primary channel. Frame 1504 may be a beacon frame. AP2 may transmit frame 1504 on the selected primary channel (CH2).

AP3 may receive frame 1502 from AP1, for example, during performing a channel scan ahead of selecting a primary channel. AP3 may not receive frame 1504 from AP2. Accordingly, AP3 may believe the second frequency channel (CH2) to be idle and may select the second frequency channel (CH2) as a primary channel. AP3 may then proceed to transmit a frame 1506 including an indication of the selected primary channel. Frame 1506 may be a beacon frame. AP3 may transmit frame 1506 on the selected primary channel (CH2).

The AP controller may receive frames 1504 and 1506 from AP2 and AP3 respectively. For example, if the second frequency channel (CH2) indicated in frame 1504 does not conflict with a confirmed primary channel selection of another AP of the multi-AP group, the AP controller may set the second frequency channel (CH2) as a confirmed primary channel for AP2. For example, if frame 1506 may be received after frame 1504, the second frequency channel (CH2) indicated in frame 1506 may conflict with the confirmed primary channel selection of AP2. To avoid this conflict, the AP controller may transmit a frame 1508 to AP3 instructing to modify its primary channel selection. Frame 1508 may include one or more indications of confirmed primary channel sections (CH1 and CH2 in example 1500). AP3 may select a new primary channel (e.g., CH3) that is different than CH1 and CH2 and may then proceed to transmit a frame 1510 including an indication of the new selected primary channel (CH3), for example, based on receiving frame 1508. The procedure described with respect to FIG. 15 may be performed without the presence of an AP controller. For example, actions by the AP controller may be performed by the first AP (e.g., master AP) of the multi-AP group.

With respect to FIG. 14, for example, after the APs of the multi-AP group perform primary channel selection, frequency channel assignment for the multi-AP transmission may be performed in a similar fashion. For example, the first AP, AP1, may transmit an MBSRP frame 702 on both the first and second channels (CH1) and (CH2). MBSRP frame 702 may poll receiving APs for buffer status for a multi-AP transmission during the allocated portion of the TXOP. An AP that wishes to participate in the planned multi-AP transmission may respond to MBSRP frame 702 by transmitting a MBSR frame to AP1. The MBSR frame may include a BSR for traffic intended to be transmitted by the AP during the multi-AP transmission. The MBSR frame may not include an indication of whether the AP intends to transmit to multiple users during the multi-AP transmission.

AP2 and AP3 may respond to MBSRP frame 702 by transmitting MBSR frames 1402 and 1404, respectively (e.g., such as described with respect to FIG. 13). MBSRP frame 702 may indicate the channels on which AP2 and AP3 shall respond to MBSRP frame 702 (e.g., such as described with respect to FIG. 7). AP2 may transmit MBSR frame 1402 on the first channel (CH1), and AP3 may transmit MBSR frame 1404 on the second channel (CH2) (e.g., such as described with respect to FIG. 14).

AP1 may determine an assignment of frequency channel to participating APs of the planned multi-AP transmission, for example, based on receiving MBSR frames 1402 and 1404. AP1 may determine the assignment based on confirmed primary channels of participating APs. AP1, as a first node, for example, may itself establish/maintain a list of confirmed primary channels of other APs. AP1 may obtain a list of confirmed primary channels of APs from an AP controller. AP2 may have selected the second frequency channel (CH2) as a primary channel and that this selection is confirmed at AP1 and/or an AP controller (e.g., such as described with respect to FIG. 14). AP3 may have selected the first frequency channel (CH1) as a primary channel and that this selection is confirmed at AP1 and/or an AP controller (e.g., such as described with respect to FIG. 14). AP1 may assign AP2 its primary channel, CH2, and AP3 its primary channel, CH3, for the multi-AP transmission, for example, based on this information.

AP1 may transmit an MSA frame 1406 including the frequency channel assignment on both the first and second channels (CH1) and (CH2). AP2 and AP3 may broadcast the frequency channel assignment to their associated STAs by re-transmitting the frequency channel assignment in MSA frames 1408 and 1410, respectively, for example, based on receiving MSA frame 1406. In order to prevent OBSS STAs surrounding AP2 and AP3 on both CH1 and CH2 from accessing the channel, AP2 and AP3 may transmit MSA frames 1408 and 1410 respectively on both the first and second frequency channels (CH1) and (CH2). AP2 and AP3 may proceed to participate in the multi-AP transmission during the allocated portion of the TXOP.

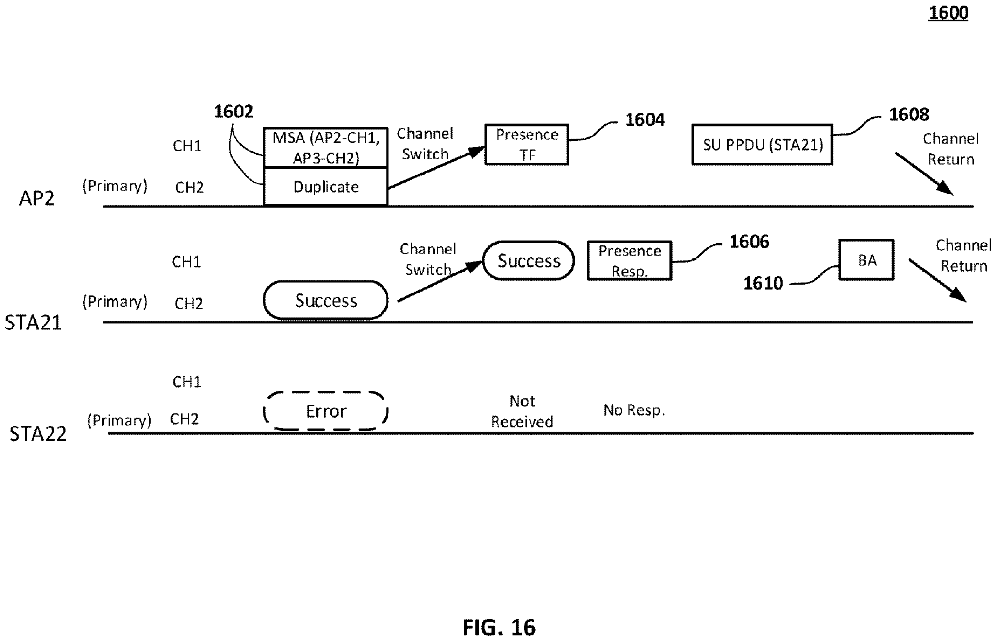

FIG. 16 shows an example procedure for setting up a multi-AP transmission. FIG. 16 shows an example 1600 of an example procedure for setting up a multi-AP transmission. Example 1600 includes an AP, AP2, and a plurality of computing devices (e.g., wireless devices and/or STAs), STA21 and STA22. STA21 and/or STA22 may be associated with AP2. AP2 may be part of a multi-AP group in which a multi-AP transmission is being setup. The available frequency resources of the multi-AP group may be divided into a first frequency channel (CH1) and a second frequency channel (CH2). CH1 and CH2 may be non-overlapping channels.

The procedure illustrated in example 1600 may follow a frequency channel assignment for the multi-AP transmission. Example 1600 may begin with AP2 transmitting an MSA frame 1602 including a frequency channel assignment for the multi-AP transmission. AP2 may be assigned a first frequency channel (CH1) for the multi-AP transmission. The first frequency channel (CH1) may be different than a primary channel of the AP2 (CH2). AP2 may transmit MSA frame 1602 on both the first and second frequency channels (CH1) and (CH2).

STA21 may successfully receive MSA frame 1602. STA22 may fail to receive or receives frame 1602 in errorSTA21, previously operating of the primary channel CH2 of AP2 with which it is associated, may switch channels to the first frequency channel (CH1) assigned to AP2 in MSA frame 1602, for example, based on receiving MSA frame 1602. STA22 may remain on the primary channel CH2 of AP2.

To avoid a situation of unsuccessful communication as illustrated, for example, AP2 may transmit a frame 1604 on the channel assigned to it in MSA frame 1602 (CH1) polling associated STAs (STA21 and STA22) for presence on the assigned frequency channel (CH1) (e.g., such as described with respect to FIG. 8). Frame 1604 may be a trigger frame. AP2 may transmit frame 1604, for example, based on a condition that the frequency channel assigned to it for the multi-AP transmission is different than its primary channel. STA21, having switched channels from CH2 to CH1, may respond to frame 1604 from AP2 by transmitting a frame 1606 on CH1, confirming its presence on CH1. STA22, having remained on the primary channel (CH2) of AP2, may not respond to frame 1604, for example, based on not receiving frame 1604.

AP2 may determine that a multi-user transmission to STA21 and STA22 during the multi-AP transmission may not be received successfully by both STA21 and STA22, for example, based on receiving frame 1606 from STA21 and/or the lack of a response from STA22 on the assigned channel (CH1). AP2 may opt for a single user transmission to STA21 during the multi-AP transmission and/or may transmit an SU PPDU 1608 on the assigned channel CH1 to STA21. STA 21 may acknowledge SU PPDU 1608 from AP2 by transmitting a BA frame 1610 to AP2. Both AP2 and STA21 may return to the primary channel (CH2) of AP2, for example, after the transmission of BA frame 1610. AP2 may transmit an MU PPDU to STA21 and STA22 during the multi-AP transmission on the assigned channel, for example, based on STA21 and STA22 responding to frame 1604 and confirming their presence on the assigned channel (CH1).

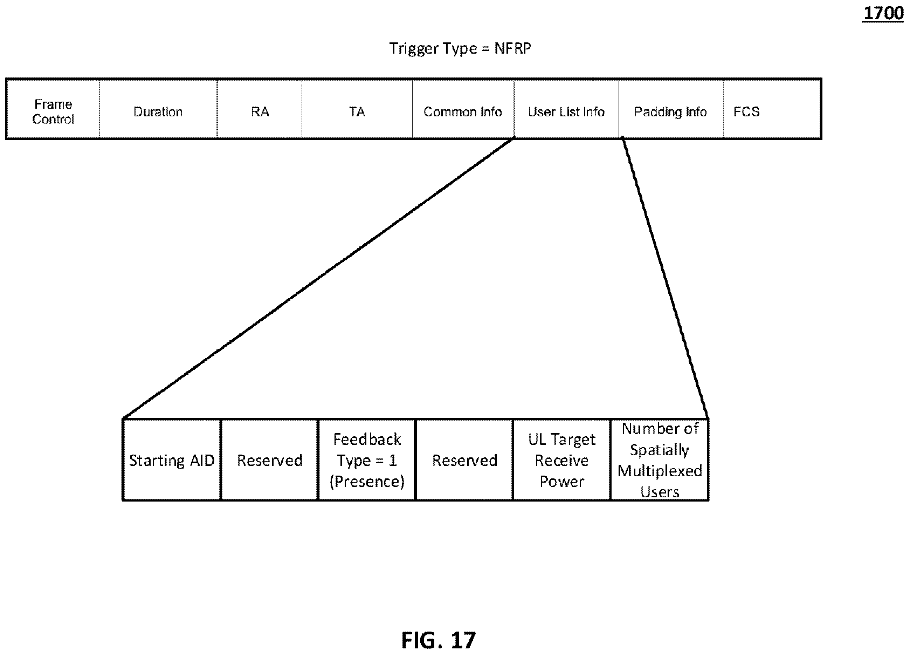

FIG. 17 shows an example frame for setting up a multi-AP transmission. FIG. 17 shows an example frame 1700. Frame 1700 may be an example of frame 1604 transmitted by AP2 to poll STA21 and/or STA22 for presence on the assigned channel. Frame 1700 may be a null data packet (NDP) feedback report poll (NFRP) trigger frame. An AP may use the Feedback Type subfield of the User List Info field of the NFRP trigger frame to poll associated STAs for presence on the assigned channel. An associated STA receiving frame 1700 may respond with a presence response frame on the assigned channel when the Feedback Type subfield is set to 1.

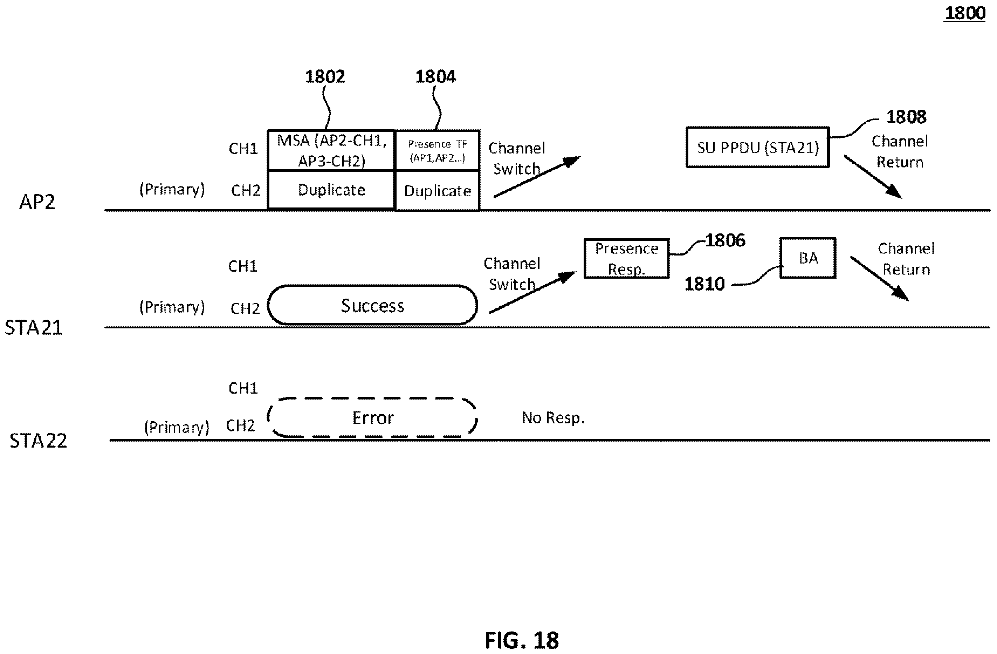

FIG. 18 shows an example procedure for setting up a multi-AP transmission. FIG. 18 shows an example 1800. Example 1800 includes an AP, AP2, and a plurality of STAs, STA21 and STA22 (e.g., such as described with respect to FIG. 16). STA21 and STA22 may be associated with AP2. AP2 may be part of a multi-AP group in which a multi-AP transmission is being setup. The available frequency resources of the multi-AP group may be divided into a first frequency channel (CH1) and a second frequency channel (CH2). CH1 and CH2 may be non-overlapping channels.

The procedure illustrated in example 1800 may follow a frequency channel assignment for the multi-AP transmission. For example, example 1800 may begin with AP2 transmitting an MSA frame 1802, including a frequency channel assignment for the multi-AP transmission, aggregated with a frame 1804. MSA frame 1802 and frame 1804 may be aggregated in an AMPDU.

AP2 may be assigned a first frequency channel (CH1) for the multi-AP transmission. The first frequency channel (CH1) may be different than a primary channel of the AP2 (CH2). Frame 1804 may poll STA21 and STA22 for presence on the assigned channel (CH1). AP2 may transmit MSA frame 1802 and frame 1804 on the first and/or second frequency channels (CH1) and (CH2). Frame 1804 may be a frame that polls STA presence for multiple APs of the multi-AP group, for example, if aggregated frames 1802 and 1804 are transmitted on the first and second frequency channels (CH1) and (CH2). For example, in addition to polling STA presence for AP2, frame 1804 may poll STA presence for another AP, AP1, of the multi-AP group. The other AP may be an AP participating in the multi-AP transmission.

AP2 may switch to the assigned channel (CH1), for example, based on (e.g., after) transmitting frames 1802 and 1804. STA21 may successfully receive frames 1802 and 1804 and/or STA22 may fail to receive or receives frames 1802 and 1804 in error. STA21, previously operating of the primary channel CH2 of AP2 with which it is associated, may switch channels to the first frequency channel (CH1) assigned to AP2 in MSA frame 1802, for example, based on receiving MSA frame 1802. STA21 may proceed to transmit a frame 1806 confirming its presence of the first frequency channel (CH1), for example, based on (e.g., after) switching to the first frequency channel (CH1). STA22 may remain on the primary channel CH2 of AP2 and may not transmit a response to frame 1804.

AP2 may determine that a multi-user transmission to STA21 and STA22 during the multi-AP transmission may not be received successfully by both STA21 and STA22, for example, based on receiving frame 1806 from STA21 and the lack of a response from STA22 on the assigned channel (CH1). As such, AP2 may opt for a single user transmission to STA21 during the multi-AP transmission and may transmit an SU PPDU 1808 on the assigned channel CH1 to STA21. STA 21 may acknowledge SU PPDU 1808 from AP2 by transmitting a BA frame 1810 to AP2. AP2 and/or STA21 may return to the primary channel (CH2) of AP2 after the transmission of BA frame 1910. AP2 may transmit an MU PPDU to STA21 and STA22 during the multi-AP transmission on the assigned channel, for example, based on STA21 and STA22 responding to frame 1804 and confirming their presence on the assigned channel (CH1).

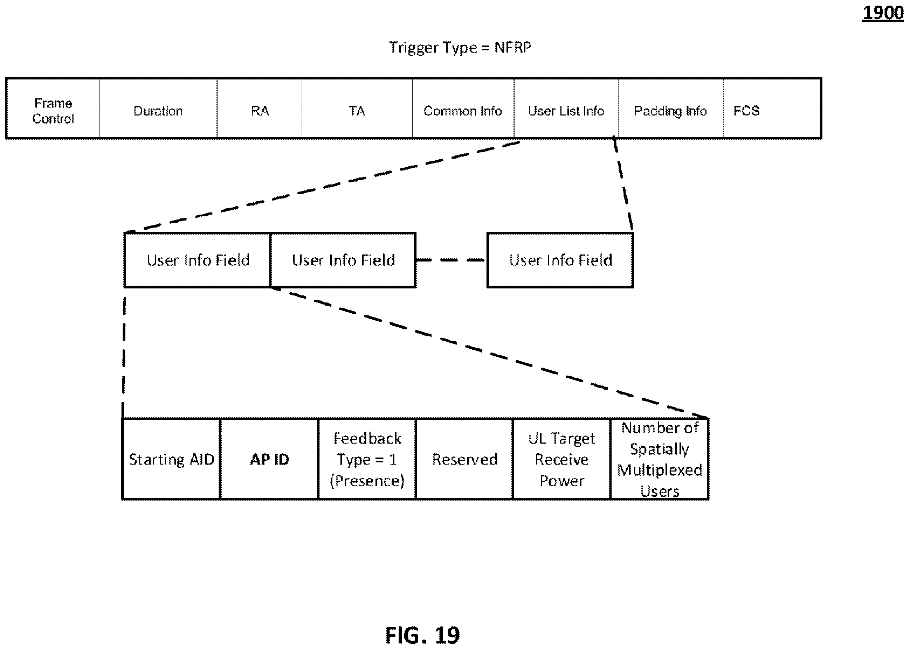

FIG. 19 shows an example frame for setting up a multi-AP transmission. FIG. 19 shows an example frame 1900. Frame 1900 may be an example of frame 1804 transmitted by AP2 to poll STA21 and STA22 for presence on the assigned channel. Frame 1900 may be a null data packet (NDP) feedback report poll (NFRP) trigger frame. The NFRP trigger frame may include a plurality of User Info fields each corresponding to a respective AP for which the NFRP trigger frame polls for STA presence. A User Info field (e.g., each User Info field) may include an AP ID subfield that identifies a respective AP. The User Info field may include a Feedback Type subfield which may be set to 1 to poll associated STAs for presence on the assigned channel. A STA receiving frame 1900 may verify whether its associated AP appears in a User Info field of frame 1900, and if so, whether the Feedback Type subfield is set to 1. If the answer is yes, the STA may respond with a presence response frame to its STA on the assigned channel.

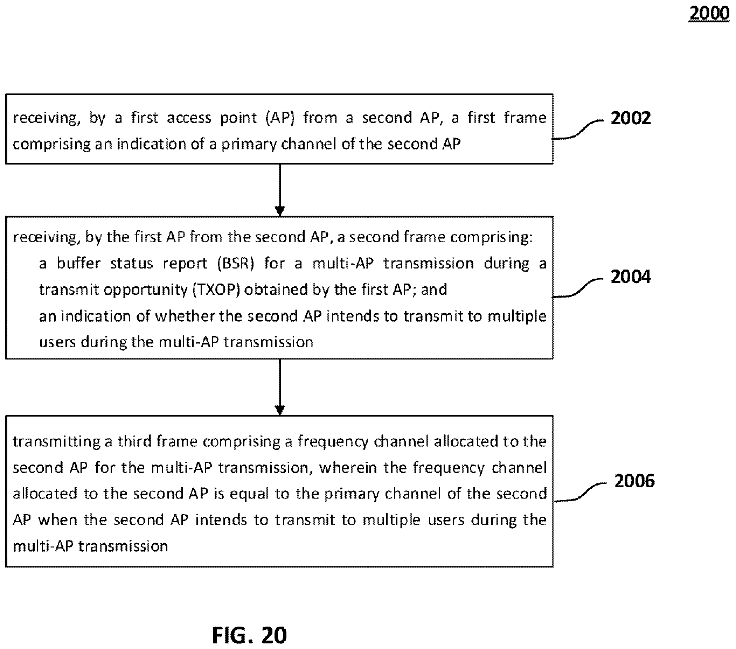

FIG. 20 shows an example process. FIG. 20 illustrates an example process 2000. Example process 2000 may be performed by a first AP. The first AP may be a first AP of a multi-AP group. The first AP may perform process 2000 prior to a multi-AP transmission to occur during a TXOP obtained by the first AP. The multi-AP transmission may include Coordinated OFDMA, Coordinated Spatial Reuse, Joint Transmission and Reception, Coordinated Beamforming and Coordinated Time Division Multiple Access (TDMA), or any combination of the aforementioned techniques.

Process 2000 may begin in step 2002, which includes receiving, by the first AP from a second AP, a first frame comprising an indication of a primary channel of the second AP. The first frame may comprise a coordination request frame to join a multi-AP set of the first AP. The primary channel of the second AP may correspond to a default channel that the second AP monitors for management frames. Alternatively or additionally, the primary channel of the second AP may correspond to a default channel that the second AP uses to transmit beacon frames. In step 2004, process 2000 includes receiving, by the first AP from the second AP, a second frame comprising: a buffer status report (BSR) for the multi-AP transmission; and/or an indication of whether the second AP intends to transmit to multiple users during the multi-AP transmission.

The second frame may comprise a multi-AP buffer status report (MBSR) frame. The indication of whether the second AP intends to transmit to multiple users during the multi-AP transmission may be provided in a Multiple Receiver PPDU (MRP) field of the MBSR frame. The MBSR frame may comprise a QoS null frame. The indication of whether the second AP intends to transmit to multiple users during the multi-AP transmission may be signaled using a Queue Size High and a Queue Size All subfields of the QoS null frame, for example, by setting the Queue Size High subfield to a non-zero value and the Queue Size All subfield to 0.

The BSR for the multi-AP transmission may indicate a traffic identifier (TID) for traffic having a non-empty queue size at the second AP and that the second AP wishes to transmit during the multi-AP transmission. Process 2000 may include, before step 2004, transmitting, by the first AP to the second AP, a fourth frame polling the second AP for buffered traffic for the multi-AP transmission. In an embodiment, the fourth frame comprises a MBSRP frame.

Process 2000 may include allocating, by the first AP, a frequency channel to the second AP for the multi-AP transmission based on the indication of whether the second AP intends to transmit to multiple users during the multi-AP transmission. Process 2000 may include allocating the primary channel of the second AP to the second AP for the multi-AP transmission if the second AP intends to transmit to multiple users during the multi-AP transmission. Process 2000 may include allocating the primary channel of the second AP, or another channel, to the second AP for the multi-AP transmission if the second AP does not intend to transmit to multiple users during the multi-AP transmission. Process 2000 may further include determining whether the primary channel of second AP is allocated to another AP for the multi-AP transmission; and/or allocating the primary channel of the second AP to the second AP for the multi-AP transmission if the primary channel of the second AP is not allocated to another AP for the multi-AP transmission.

Process 2000 may include determining whether the primary channel of the second AP indicated in the first frame is distinct from a confirmed primary channel of a third AP, member of the multi-AP group; and/or transmitting a fifth frame to the second AP confirming or modifying the primary channel of the second AP based on the determination. The fifth frame may instruct the second AP to modify its primary channel to a different channel, for example, if the primary channel of the second AP indicated in the first frame is the same as the confirmed primary channel of the third AP.

In step 2006, process 2000 may include transmitting a third frame comprising a frequency channel allocated to the second AP for the multi-AP transmission. The frequency channel allocated to the second AP may be equal to the primary channel of the second AP when the second AP intends to transmit to multiple users during the multi-AP transmission. The third frame may comprise a multi-AP schedule announcement (MSA) frame.

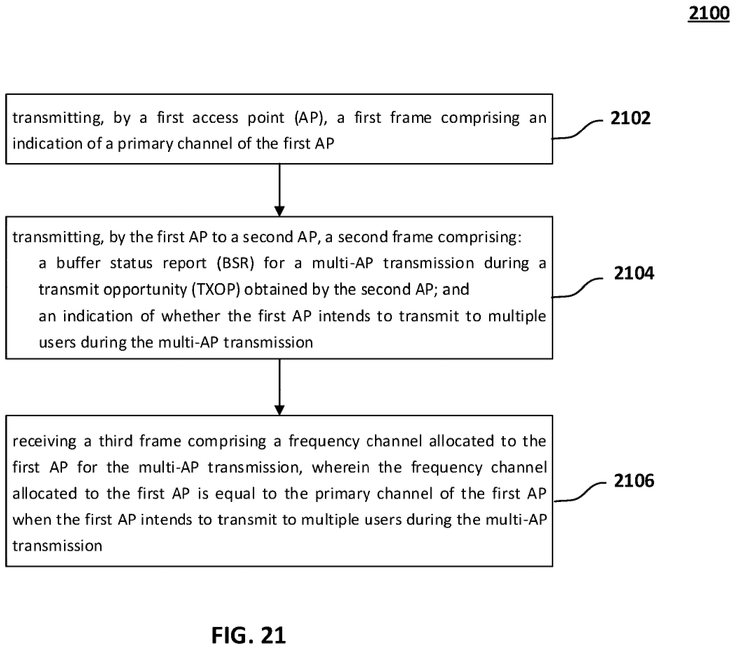

FIG. 21 shows an example process. FIG. 21 shows an example process 2100. Example process 2100 may be performed by a first AP. The first AP may be an AP of a multi-AP group, such as a second AP (e.g., slave AP) of the multi-AP group. In an embodiment, the first AP may perform process 2100 prior to a multi-AP transmission to occur during a TXOP obtained by a second AP, for example, the first AP (e.g., master AP) of the multi-AP group. The multi-AP transmission may include Coordinated OFDMA, Coordinated Spatial Reuse, Joint Transmission and Reception, Coordinated Beamforming and Coordinated Time Division Multiple Access (TDMA), and/or any combination of the aforementioned techniques.

Process 2100 may begin in step 2102, which may include transmitting, by the first AP, a first frame comprising an indication of a primary channel of the first AP. The first frame may comprise a coordination request frame to join a multi-AP set of the second AP. The primary channel of the first AP may correspond to a default channel that the first AP monitors for management frames. Alternatively or additionally, the primary channel of the first AP may correspond to a default channel that the first AP uses to transmit beacon frames.

In step 2104, process 2100 includes transmitting, by the first AP to the second AP, a second frame comprising: a buffer status report (BSR) for the multi-AP transmission; and/or an indication of whether the first AP intends to transmit to multiple users during the multi-AP transmission. The second frame may comprise a multi-AP buffer status report (MBSR) frame. The indication of whether the first AP intends to transmit to multiple users during the multi-AP transmission may be provided in a Multiple Receiver PPDU (MRP) field of the MBSR frame. The MBSR frame may comprise a QoS null frame. The indication of whether the first AP intends to transmit to multiple users during the multi-AP transmission may be signaled using a Queue Size High and a Queue Size All subfields of the QoS null frame, for example, by setting the Queue Size High subfield to a non-zero value and the Queue Size All subfield to 0. The BSR for the multi-AP transmission indicates a traffic identifier (TID) for traffic having a non-empty queue size at the first AP and that the first AP wishes to transmit during the multi-AP transmission. Process 2100 may further include, before step 2104, receiving, by the first AP from the second AP, a fourth frame polling the first AP for buffered traffic for the multi-AP transmission. The fourth frame may comprise a MBSRP frame.

In step 2106, process 2100 may include receiving a third frame comprising a frequency channel allocated to the first AP for the multi-AP transmission. The frequency channel allocated to the first AP may be equal to the primary channel of the first AP when the first AP intends to transmit to multiple users during the multi-AP transmission. The third frame may comprise a multi-AP schedule announcement (MSA) frame.

The second AP may allocate a frequency channel to the first AP for the multi-AP transmission, for example, based on the indication of whether the first AP intends to transmit to multiple users during the multi-AP transmission. The second AP may allocate the primary channel of the first AP to the first AP for the multi-AP transmission, for example, if the first AP intends to transmit to multiple users during the multi-AP transmission. For example, if the first AP does not intend to transmit to multiple users during the multi-AP transmission, the frequency channel allocated to the first AP is equal to the primary channel of the first AP or to another channel. Process 2100 may further comprise, for example, after step 2106, transmitting, by the first AP, a PPDU during the multi-AP transmission. The PPDU may comprise a broadcast frame, a multi-cast frame, or an individually addressed data frame. The PPDU may comprise a Single User (SU) PPDU or a Multi-user (MU) PPDU.

Process 2100 may further include receiving, by the first AP, a fifth frame confirming or modifying the primary channel of the first AP; and/or setting, by the first AP, the primary channel of the first AP based on the fifth frame. The fifth frame may instruct the first AP to modify its primary channel to a different channel, for example, if the primary channel of the first AP indicated in the first frame is the same as a confirmed primary channel of a third AP. Process 2100 may include broadcasting, by the first AP, the third frame to one or more associated computing devices (e.g., wireless devices and/or STAs).

Process 2100 may further include, for example, if the frequency channel allocated to the first AP indicated in the third frame is different than the primary channel of the first AP, transmitting, by the first AP, on the frequency channel allocated to the first AP, a sixth frame polling associated STAs for presence on the allocated frequency channel. Process 2100 may include receiving, by the first AP, a response frame on the frequency channel allocated to the first AP from at least two associated STAs; and/or transmitting a PPDU to the at least two associated STAs on the frequency channel allocated to the first AP for the multi-AP transmission. Process 2100 may include receiving, by the first AP, a response frame on the frequency channel allocated to the first AP from only one associated STA; and/or transmitting a single-user (SU) PPDU to the associated STA on the frequency channel allocated to the first AP for the multi-AP transmission.

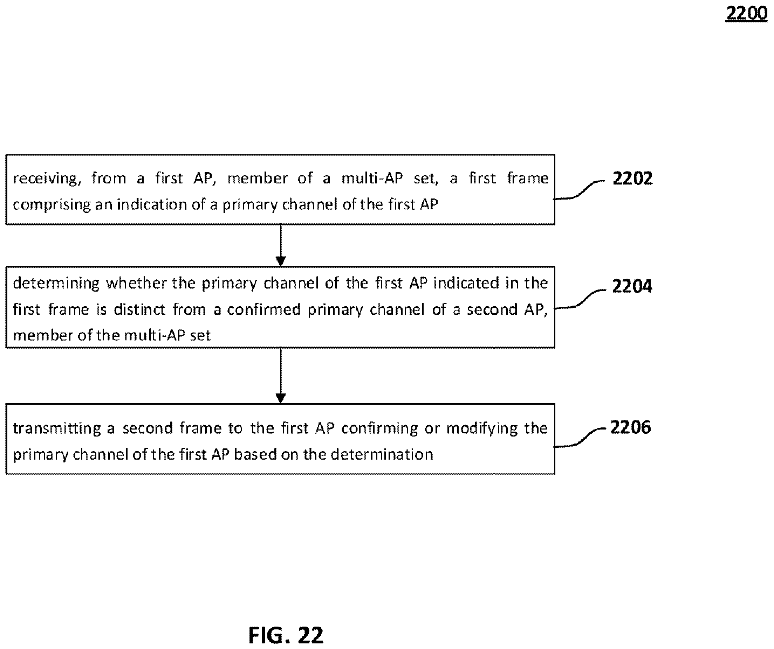

FIG. 22 shows an example process. FIG. 22 shows an example process. Example process 2200 may be performed by an AP or an AP controller. The AP may be a first AP of a multi-AP group. The AP controller may be a controller of a multi-AP group. The AP may perform process 2200 prior to a multi-AP transmission to occur during a TXOP obtained by the AP. The multi-AP transmission may include Coordinated OFDMA, Coordinated Spatial Reuse, Joint Transmission and Reception, Coordinated Beamforming and Coordinated Time Division Multiple Access (TDMA), and/or any combination of the aforementioned techniques.

Process 2200 may begin in step 2202, which may include receiving, from a first AP, a first frame comprising an indication of a primary channel of the first AP. The first AP may be a member of the multi-AP group. The primary channel of the first AP may correspond to a default channel that the first AP monitors for management frames. Alternatively or additionally, the primary channel of the first AP may correspond to a default channel that the first AP uses to transmit beacon frames.

The first AP may select/determine its primary channel based on receiving a beacon frame from another member of the multi-AP set. The first AP may select its primary channel to be different than a frequency channel on which the beacon frame from the other member of the multi-AP set is received. In step 2204, process 2200 may include determining whether the primary channel of the first AP indicated in the first frame is distinct from a confirmed primary channel of a second AP, member of the multi-AP group.

In step 2206, process 2200 may include transmitting a second frame to the first AP confirming or modifying the primary channel of the first AP, for example, based on the determination. The second frame may confirm the primary channel of the first AP indicated in the first frame, for example, if the primary channel of the first AP indicated in the first frame is distinct from the confirmed primary channel of the second AP. Alternatively, the second frame may modify the primary channel of the first AP indicated in the first frame. The second frame may instruct the first AP to select as a primary channel a channel that is different than the confirmed primary channel of the second AP.

Process 2200 may comprise transmitting an MBSRP frame polling the first AP for buffered traffic for a multi-AP transmission; receiving, from the first AP, a MBSR frame; allocating to the first AP the primary channel of the first AP for the multi-AP transmission; and transmitting an MSA frame comprising the frequency channel allocated to the first AP for the multi-AP transmission.

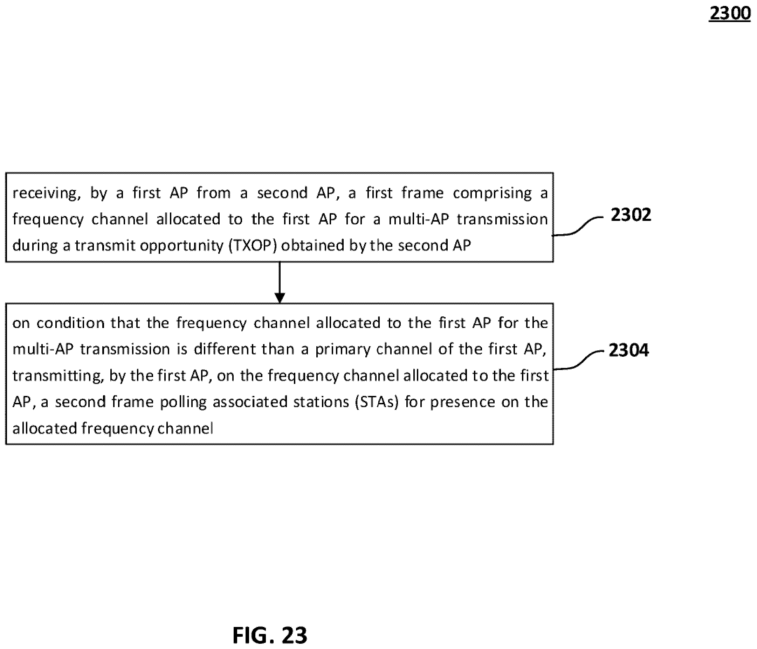

FIG. 23 shows an example process. FIG. 23 shows an example process 2300. Example process 2300 may be performed by a first AP. The first AP may be an AP of a multi-AP group, such as a second AP (e.g., slave AP) of the multi-AP group. The first AP may perform process 2300 prior to a multi-AP transmission to occur during a TXOP obtained by another AP, for example, the first AP (e.g., master AP) of the multi-AP group. The multi-AP transmission may include Coordinated OFDMA, Coordinated Spatial Reuse, Joint Transmission and Reception, Coordinated Beamforming and Coordinated Time Division Multiple Access (TDMA), and/or any combination of the aforementioned techniques.

Process 2300 may begin in step 2302, which may include receiving, by the first AP from a second AP, a first frame comprising a frequency channel allocated to the first AP for a multi-AP transmission during TXOP obtained by the second AP. The second AP may be a first AP of the multi-AP group. Process 2300 may include, for example, after step 2302, broadcasting, by the first AP, the first frame to computing devices (e.g., wireless devices and/or STAs) associated with the first AP.

In step 2304, process 2300 may include, for example, based on the frequency channel being allocated to the first AP for the multi-AP transmission is different than a primary channel of the first AP, transmitting on the frequency channel allocated to the first AP, a second frame polling associated STAs for presence on the allocated frequency channel. The second frame comprises a trigger frame. The trigger frame may include a null data packet (NDP) feedback report poll (NFRP) trigger frame. Transmitting the second frame may comprise transmitting the second frame aggregated with the first frame.

Process 2300 may include receiving, by the first AP from the second AP, a third frame polling the first AP for buffered traffic for the multi-AP transmission; and transmitting, by the first AP to the second AP, a fourth frame comprising a BSR. The fourth frame may comprise an indication of whether the first AP intends to transmit to multiple users during the multi-AP transmission.

Process 2300 may further comprise transmitting, by the first AP, a PPDU during the multi-AP transmission. The PPDU may comprise a broadcast frame, a multi-cast frame, or an individually addressed data frame. The PPDU comprises a Single User (SU) PPDU or a Multi-user (MU) PPDU.

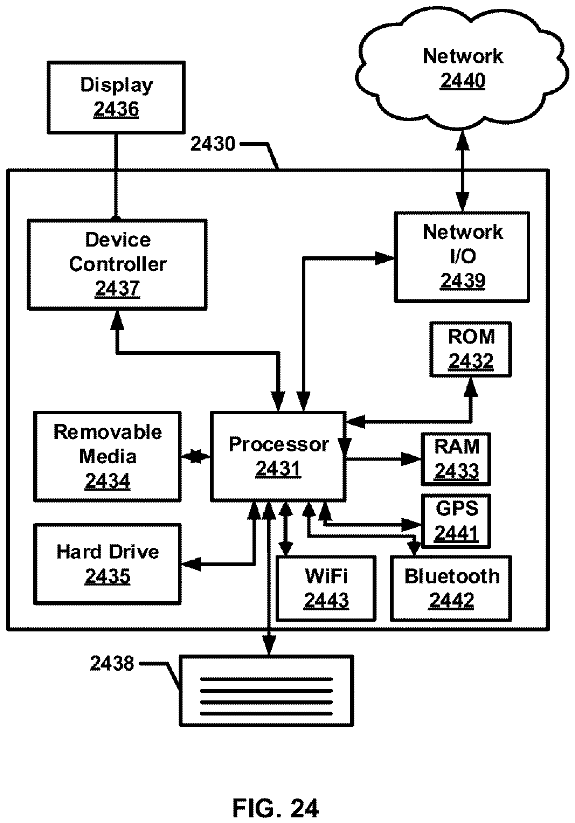

FIG. 24 shows example elements of a computing device that may be used to implement any of the various devices described herein, including, for example, a computing device (e.g., wireless device and/or STA) (e.g., 106-1, 106-2, 106-3, 106-4, 106-5, 106-6, 106-7, 106-8, 804, 806, 904, 906, 1202, 1204, 1302, 1304, 1402, 1404, 1502, 1504, 1602, 1604, 1702, 1704), an AP (e.g., 104-1, 104-2, 802, 902), communication devices (e.g., 210, 260), and/or any computing and/or communication device described herein. The computing device 2430 may comprise one or more processors 2431, which may execute instructions stored in the random-access memory (RAM) 2433, the removable media 2434 (such as a Universal Serial Bus (USB) drive, compact disk (CD) or digital versatile disk (DVD), or floppy disk drive), or any other desired storage medium. Instructions may also be stored in an attached (or internal) hard drive 2435. The computing device 2430 may also comprise a security processor (not shown), which may execute instructions of one or more computer programs to monitor the processes executing on the processor 2431 and any process that requests access to any hardware and/or software components of the computing device 2430 (e.g., ROM 2432, RAM 2433, the removable media 2434, the hard drive 2435, the device controller 2437, a network interface 2439, a GPS 2441, a Bluetooth interface 2442, a WiFi interface 2443, etc.). The computing device 2430 may comprise one or more output devices, such as the display 2436 (e.g., a screen, a display device, a monitor, a television, etc.), and may comprise one or more output device controllers 2437, such as a video processor. There may also be one or more user input devices 2438, such as a remote control, keyboard, mouse, touch screen, microphone, etc. The computing device 2430 may also comprise one or more network interfaces, such as a network interface 2439, which may be a wired interface, a wireless interface, or a combination of the two. The network interface 2439 may provide an interface for the computing device 2430 to communicate with a network 2440 (e.g., a RAN, or any other network). The network interface 2439 may comprise a modem (e.g., a cable modem), and the external network 2440 may comprise communication links, an external network, an in-home network, a provider's wireless, coaxial, fiber, or hybrid fiber/coaxial distribution system (e.g., a DOCSIS network), or any other desired network. Additionally, the computing device 2430 may comprise a location-detecting device, such as a global positioning system (GPS) microprocessor 2441, which may be configured to receive and process global positioning signals and determine, with possible assistance from an external server and antenna, a geographic position of the computing device 2430.

The example in FIG. 24 may be a hardware configuration, although the components shown may be implemented as software as well. Modifications may be made to add, remove, combine, divide, etc. components of the computing device 2430 as desired. Additionally, the components may be implemented using basic computing devices and components, and the same components (e.g., processor 2431, ROM storage 2432, display 2436, etc.) may be used to implement any of the other computing devices and components described herein. For example, the various components described herein may be implemented using computing devices having components such as a processor executing computer-executable instructions stored on a computer-readable medium, as shown in FIG. 24. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising: receiving, by a first access point (AP) from a second AP, a first frame comprising a first indication of a primary channel of the second AP.

Clause 2. The method of clause 1, further comprising transmitting a multi-AP buffer status report poll (MBSRP) frame.

Clause 3. The method of any one of clauses 1-2, further comprising receiving a multi-AP buffer status report (MBSR) frame comprising: a buffer status report (BSR); and a second indication of whether the second AP is configured to transmit to multiple users during the multi-AP transmission.

Clause 4. The method of any one of clauses 1-3, further comprising allocating, based on the second indication and based on the second AP being configured to transmit to multiple users during the multi-AP transmission, a frequency channel to the second AP for the multi-AP transmission, wherein the frequency channel allocated to the second AP is the primary channel of the second AP.

Clause 5. The method of any one of clauses 1-4, further comprising transmitting a multi-AP schedule announcement (MSA) frame.

Clause 6. The method of any one of clauses 1-5, further comprising transmitting, based on the second indication, a third frame comprising a frequency allocation, wherein the frequency allocation is to the second AP for the multi-AP transmission.

Clause 7. The method of any one of clauses 1-6, wherein the first AP is a slave AP and the second AP is a master AP.

Clause 8. The method of any one of clauses 1-7, wherein the first frame comprises a coordination request frame to join a multi-AP set of the first AP.

Clause 9. The method of any one of clauses 1-8, wherein the primary channel of the second AP corresponds to a default channel that the second AP monitors for management frames.

Clause 10. The method of any one of clauses 1-9, wherein the primary channel of the second AP corresponds to a default channel a default channel configured for transmission of beacon frames by the second AP.

Clause 11. The method of any one of clauses 1-10, further comprising: transmitting a fourth frame polling the second AP for buffered traffic for the multi-AP transmission.

Clause 12. The method of any one of claims 1-11, wherein the BSR for the multi-AP transmission indicates a traffic identifier (TID) for traffic having a non-empty queue size at the second AP.

Clause 13. The method of any one of clauses 1-12, further comprising allocating the primary channel of the second AP, or another channel, to the second AP for the multi-AP transmission, if the second AP does not intend to transmit to multiple users during the multi-AP transmission.

Clause 14. The method of any one of clauses 1-13, further comprising determining whether the primary channel of second AP is allocated to another AP for the multi-AP transmission.

Clause 15. The method of any one of clauses 1-14, further comprising allocating the primary channel of the second AP to the second AP for the multi-AP transmission, if the primary channel of the second AP is not allocated to another AP for the multi-AP transmission.

Clause 16. The method of any one of clauses 1-15, wherein the multi-AP transmission is a Coordinated Orthogonal Frequency Division Multiple Access (COFDMA) transmission.

Clause 17. The method of any one of clauses 1-16, wherein the second AP transmits a physical layer protocol data unit (PPDU) during the multi-AP transmission, and wherein the PPDU comprises at least one of: a broadcast frame, a multi-cast frame, or an individually addressed data frame.

Clause 18. A computing device comprising one or more processors and memory storing instructions that, when executed by the one or more processors, cause the computing device to perform the method of any one of clauses 1-17 and 124-125.

Clause 19. A system comprising an access point (AP) configured to perform the method of any one of clauses 1-17 and 124-125, and the AP configured to receive at least one message from another AP.

Clause 20. A computer-readable medium storing instructions that, when executed, cause performance of the method of any one of clauses 1-17 and 124-125.

Clause 21. A method comprising: receiving, by a first access point (AP) from a second AP, a first frame comprising a first indication of a primary channel of the second AP.

Clause 22. The method of clause 21, further comprising receiving a second frame comprising: a buffer status report (BSR) for a multi-AP transmission during a transmit opportunity (TXOP) obtained by the first AP; and a second indication of whether the second AP intends to transmit to multiple users during the multi-AP transmission.

Clause 23. The method of any one of clauses 21-22, further comprising transmitting, based on the second indication, a third frame comprising a frequency allocation, wherein the frequency allocation is to the second AP for the multi-AP transmission.

Clause 24. The method of any one of clauses 21-23, further comprising transmitting a fourth frame polling the second AP for buffered traffic for the multi-AP transmission.

Clause 25. The method of any one of clauses 21-24, wherein the BSR for the multi-AP transmission indicates a traffic identifier (TID) for traffic having a non-empty queue size at the second AP.

Clause 26. The method of any one of clauses 21-25, wherein the second frame comprises a multi-AP buffer status report (MBSR) frame.

Clause 27. The method of any one of clauses 21-26, wherein the first frame comprises a coordination request frame to join a multi-AP set of the first AP.

Clause 28. The method of any one of clauses 21-27, wherein the primary channel of the second AP corresponds to a default channel that the second AP monitors for management frames.

Clause 29. The method of any one of clauses 21-28, wherein the primary channel of the second AP corresponds to a default channel that the second AP uses to transmit beacon frames.

Clause 30. The method of any one of clauses 21-29, wherein the fourth frame comprises a multi-AP buffer status report poll (MBSRP) frame.

Clause 31. The method of any one of clauses 21-30, further comprising allocating, by the first AP and based on the indication of whether the second AP intends to transmit to multiple users during the multi-AP transmission, a frequency channel to the second AP for the multi-AP transmission.

Clause 32. The method of any one of clauses 21-31, further comprising allocating, based on the second AP intending to transmit to multiple users for the multi-AP transmission, the primary channel of the second AP to the second AP for the multi-AP transmission.

Clause 33. The method of any one of clauses 21-32, further comprising allocating, based on the second AP not intending to transmit to multiple users during the multi-AP transmission, the primary channel of the second AP, or another channel, to the second AP for the multi-AP transmission.

Clause 34. The method of any one of clauses 21-33, further comprising determining whether the primary channel of the second AP is allocated to another AP for the multi-AP transmission.

Clause 35. The method of any one of clauses 21-34, further comprising allocating, based on the primary channel of the second AP not being allocated to another AP for the multi-AP transmission, the primary channel of the second AP to the second AP for the multi-AP transmission.

Clause 36. The method of any one of clauses 21-35, wherein the third frame comprises a multi-AP schedule announcement (MSA) frame.

Clause 37. The method of any one of clauses 21-36, further comprising determining whether the primary channel of the second AP indicated in the first frame is distinct from a confirmed primary channel of a third AP, wherein the third AP is a member of a multi-AP set of the first AP.

Clause 38. The method of any one of clauses 21-37, further comprising transmitting, based on the determination, a fifth frame to the second AP confirming or modifying the primary channel of the second AP.

Clause 39. The method of any one of clauses 21-38, wherein the primary channel of the second AP indicated in the first frame is the same as the confirmed primary channel of the third AP, and wherein the fifth frame instructs the second AP to modify its primary channel to a different channel.

Clause 40. The method of any one of clauses 21-39, wherein the multi-AP transmission is a Coordinated Orthogonal Frequency Division Multiple Access (COFDMA) transmission.

Clause 41. The method of any one of clauses 21-40, wherein the second AP transmits a physical layer protocol data unit (PPDU) during the multi-AP transmission, and wherein the PPDU comprises a broadcast frame, a multi-cast frame, or an individually addressed data frame.

Clause 42. The method of any one of clauses 21-41, wherein the PPDU comprises a Single User (SU) PPDU or a Multi-User (MU) PPDU.

Clause 43. A computing device comprising one or more processors and memory storing instructions that, when executed by the one or more processors, cause the computing device to perform the method of any one of clauses 21-42.

Clause 44. A system comprising an access point (AP) configured to perform the method of any one of clauses 21-42, and the AP configured to receive at least one message from another AP.

Clause 45. A computer-readable medium storing instructions that, when executed, cause performance of the method of any one of clauses 21-42.

Clause 46. A method comprising: transmitting, by a first access point (AP), a first frame comprising a first indication of a primary channel of the first AP.

Clause 47. The method of clause 46, further comprising receiving a multi-AP buffer status report poll (MBSRP) frame wherein the MBSRP frame is configured to poll, during a transmit opportunity (TXOP) obtained by the first AP, the second AP for buffered traffic for a multi-AP transmission.

Clause 48. The method of any one of clauses 46-47, further comprising transmitting a multi-AP buffer status report (MBSR) frame comprising: a buffer status report (BSR); and a second indication of whether the first AP intends to transmit to multiple users during the multi-AP transmission.

Clause 49. The method of any one of clauses 46-48, further comprising receiving, based on the second indication, a multi-AP schedule announcement (MSA) frame comprising a frequency channel allocation to the first AP for the multi-AP transmission, wherein the frequency channel allocation to the first AP is the primary channel of the first AP.

Clause 50. The method of any one of clauses 46-49, wherein the first frame comprises a coordination request frame to join a multi-AP set of the second AP.

Clause 51. The method of any one of clauses 46-50, further comprising receiving, by the first AP from the second AP, a fourth frame polling the first AP for buffered traffic for the multi-AP transmission.

Clause 52. The method of any one of clauses 46-51, wherein the second AP allocates, based on the second indication, a frequency channel to the first AP for the multi-AP transmission.

Clause 53. The method of any one of clauses 46-52, wherein the primary channel of the first AP corresponds to a default channel that the first AP monitors for management frames.

Clause 54. The method of any one of clauses 46-53, wherein the primary channel of the first AP corresponds to a default channel that the first AP uses to transmit beacon frames.

Clause 55. The method of any one of clauses 46-54, wherein the fourth frame comprises a multi-AP buffer status report poll (MBSRP) frame.

Clause 56. The method of any one of clauses 46-55, wherein the BSR for the multi-AP transmission indicates a traffic identifier (TID) for traffic having a non-empty queue size at the first AP and that the first AP wishes to transmit during the multi-AP transmission.

Clause 57. The method of any one of clauses 46-56, wherein the second frame comprises a multi-AP buffer status report (MBSR) frame.

Clause 58. The method of any one of clauses 46-57, wherein the indication of whether the second AP intents to transmit to multiple users during the multi-AP transmission is provided in a Multiple Receiver physical layer protocol data unit (PPDU) (MRP) field of MBSR frame.

Clause 59. The method of any one of clauses 46-58, wherein the second AP allocates, based on the first AP intending to transmit to multiple users during the multi-AP transmission, the primary channel of the first AP to the first AP for the multi-AP transmission.

Clause 60. The method of any one of clauses 46-59, wherein the first AP does not intend to transmit to multiple users during the multi-AP transmission, and wherein the frequency channel allocation to the first AP is the primary channel of the first AP or to another channel.

Clause 61. The method of any one of clauses 46-60, wherein the third frame comprises a multi-AP schedule announcement (MSA) frame.

Clause 62. The method of any one of clauses 46-61, further comprising receiving, by the first AP, a fifth frame confirming or modifying the primary channel of the first AP.

Clause 63. The method of any one of clauses 46-62, further comprising setting, by the first AP, the primary channel of the first AP based on the fifth frame.

Clause 64. The method of any one of clauses 46-63, wherein the primary channel of the first AP indicated in the first frame is the same as a confirmed primary channel of a third AP, and wherein the fifth frame instructs the first AP to modify its primary channel to a different channel.

Clause 65. The method of any one of clauses 46-64, further comprising broadcasting, by the first AP, the third frame to one or more associated stations (STAs).

Clause 66. The method of any one of clauses 46-65, wherein the frequency channel allocation to the first AP indicated in the third frame is different than the primary channel of the first AP, the method further comprising: transmitting, by the first AP, on the frequency channel allocated to the first AP, a sixth frame polling associated stations (STAs) for presence on the allocated frequency channel.

Clause 67. The method of any one of clauses 46-66, further comprising receiving, by the first AP, a response frame on the frequency channel allocated to the first AP from at least two associated STAs.

Clause 68. The method of any one of clauses 46-67, further comprising transmitting a PPDU to the at least two associated STAs on the frequency channel allocated to the first AP for the multi-AP transmission.

Clause 69. The method of any one of clauses 46-68, further comprising receiving, by the first AP, a response frame on the frequency channel allocated to the first AP from only one associated STA.

Clause 70. The method of any one of clauses 46-69, further comprising transmitting a single-user (SU) PPDU to the associated STA on the frequency channel allocated to the first AP for the multi-AP transmission.

Clause 71. The method of any one of clauses 46-70, wherein the multi-AP transmission is a Coordinated Orthogonal Frequency Division Multiple Access (COFDMA) transmission.

Clause 72. The method of any one of clauses 46-71, further comprising transmitting, by the first AP, a PPDU during the multi-AP transmission, wherein the PPDU comprises a broadcast frame, a multi-cast frame, or an individually addressed data frame.

Clause 73. The method of any one of clauses 46-72, wherein the PPDU comprises a Single User (SU) PPDU or a Multi-User (MU) PPDU.

Clause 74. A computing device comprising one or more processors and memory storing instructions that, when executed by the one or more processors, cause the computing device to perform the method of any one of clauses 46-73.

Clause 75. A system comprising an access point (AP) configured to perform the method of any one of clauses 46-73, and the AP configured to receive at least one message from another AP.

Clause 76. A computer-readable medium storing instructions that, when executed, cause performance of the method of any one of clauses 46-73.

Clause 77. A method comprising: receiving, from a first access point (AP), member of a multi-AP set, a first frame comprising an indication of a primary channel of the first AP.

Clause 78. The method of clause 77, further comprising determining whether the primary channel of the first AP indicated in the first frame is distinct from a confirmed primary channel of a second AP, member of the multi-AP set.

Clause 79. The method of any one of clauses 77-78, further comprising transmitting a second frame to the first AP confirming or modifying the primary channel of the first AP based on the determination.

Clause 80. The method of any one of clauses 77-79, wherein the method is performed by a third AP, member of the multi-AP set, or by an AP controller.

Clause 81. The method of any one of clauses 77-80, wherein the first AP determines the primary channel of the first AP based on receiving a beacon frame from another member of the multi-AP set.

Clause 82. The method of any one of clauses 77-81, wherein the first AP selects the primary channel of the first AP to be different than a frequency channel on which the beacon frame from the other member of the multi-AP set is received.

Clause 83. The method of any one of clauses 77-82, further comprising transmitting a multi-AP buffer status report poll (MBSRP) frame polling the first AP for buffered traffic for a multi-AP transmission.

Clause 84. The method of any one of clauses 77-83, further comprising receiving, from the first AP, a multi-AP buffer status report (MBSR) frame.

Clause 85. The method of any one of clauses 77-84, further comprising allocating to the first AP the primary channel of the first AP for the multi-AP transmission.

Clause 86. The method of any one of clauses 77-85, further comprising transmitting a multi-AP schedule announcement (MSA) frame comprising the frequency channel allocation to the first AP for the multi-AP transmission.

Clause 87. The method of any one of clauses 77-86, wherein the multi-AP transmission is a Coordinated Orthogonal Frequency Division Multiple Access (COFDMA) transmission.

Clause 88. The method of any one of clauses 77-87, wherein the first AP transmits a physical layer protocol data unit (PPDU) during the multi-AP transmission, and wherein the PPDU comprises a broadcast frame, a multi-cast frame, or an individually addressed data frame.

Clause 89. The method of any one of clauses 77-88, wherein the PPDU comprises a Single User (SU) PPDU or a Multi-User (MU) PPDU.

Clause 90. A computing device comprising one or more processors and memory storing instructions that, when executed by the one or more processors, cause the computing device to perform the method of any one of clauses 77-89.

Clause 91. A system comprising an access point (AP) configured to perform the method of any one of clauses 77-89, and the AP configured to receive at least one message from another AP.

Clause 92. A computer-readable medium storing instructions that, when executed, cause performance of the method of any one of clauses 77-89.

Clause 93. A method comprising receiving, by a first access point (AP) from a second AP, a first frame comprising: a buffer status report (BSR) for a multi-AP transmission during a transmit opportunity (TXOP) obtained by the first AP; and an indication of whether the second AP intends to transmit to multiple users during the multi-AP transmission.

Clause 94. The method of clause 93, further comprising transmitting a second frame comprising a frequency channel allocation to the second AP for the multi-AP transmission, wherein the frequency channel allocation to the second AP is a primary channel of the second AP if the second AP intends to transmit to multiple users during the multi-AP transmission.

Clause 95. A computing device comprising one or more processors and memory storing instructions that, when executed by the one or more processors, cause the computing device to perform the method of any one of clauses 93-94.

Clause 96. A system comprising an access point (AP) configured to perform the method of any one of clauses 93-94, and the AP configured to receive at least one message from another AP.

Clause 97. A computer-readable medium storing instructions that, when executed, cause performance of the method of any one of clauses 93-94.

Clause 98. A method comprising: receiving, by a first access point (AP) from a second AP, a first frame comprising: a buffer status report (BSR) for the multi-AP transmission during a transmit opportunity (TXOP) obtained by first AP; and a multi-receiver transmit indication for the multi-AP transmission.

Clause 99. The method of clause 98, further comprising transmitting a second frame comprising a frequency channel allocation to the second AP for the multi-AP transmission, wherein the frequency channel allocation to the second AP is a primary channel of the second AP if the multi-receiver transmit indication indicates transmission to multiple users by the second AP.

Clause 100. A computing device comprising one or more processors and memory storing instructions that, when executed by the one or more processors, cause the computing device to perform the method of any one of clauses 98-99.

Clause 101. A system comprising an access point (AP) configured to perform the method of any one of clauses 98-99, and the AP configured to receive at least one message from another AP.

Clause 102. A computer-readable medium storing instructions that, when executed, cause performance of the method of any one of clauses 98-99.

Clause 103. A method comprising: transmitting, by a first access point (AP), a first frame comprising an indication of a primary channel of the first AP.

Clause 104. The method of clause 103, further comprising transmitting, by the first AP to a second AP, a second frame comprising: a buffer status report (BSR) for a multi-AP transmission during a transmit opportunity (TXOP) obtained by the second AP; and an indication of whether the first AP intends to transmit to multiple users during the multi-AP transmission.

Clause 105. The method of any one of clauses 103-104, further comprising receiving a third frame comprising a frequency channel allocation to the first AP for the multi-AP transmission, wherein the frequency channel allocation to the first AP is the primary channel of the first AP if the first AP intends to transmit to multiple users during the multi-AP transmission.

Clause 106. A computing device comprising one or more processors and memory storing instructions that, when executed by the one or more processors, cause the computing device to perform the method of any one of clauses 103-105.

Clause 107. A system comprising an access point (AP) configured to perform the method of any one of clauses 103-105, and the AP configured to receive at least one message from another AP.

Clause 108. A computer-readable medium storing instructions that, when executed, cause performance of the method of any one of clauses 103-105.

Clause 109. A method comprising: receiving, by a first AP from a second AP, a first frame comprising a frequency channel allocation to the first AP for a multi-AP transmission during a transmit opportunity (TXOP) obtained by the second AP.

Clause 110. The method of clause 109, further comprising transmitting, by the first AP, via the frequency channel allocated to the first AP, and based on the frequency channel allocation to the first AP for the multi-AP transmission being different than a primary channel of the first AP, a second frame polling associated stations (STAs) for presence on the allocated frequency channel.

Clause 111. The method of any one of clauses 109-110, further comprising broadcasting, by the first AP, the first frame to the associated STAs.

Clause 112. The method of any one of clauses 109-111, further comprising receiving, by the first AP from the second AP, a third frame polling the first AP for the buffered traffic for the multi-AP transmission.

Clause 113. The method of any one of clauses 109-112, further comprising transmitting, by the first AP to the second AP, a fourth frame comprising a buffer status report (BSR).

Clause 114. The method of any one of clauses 109-113, wherein the fourth frame further comprises an indication of whether the first AP intends to transmit to multiple users during the multi-AP transmission.

Clause 115. The method of any one of clauses 109-114, wherein the multi-AP transmission is a Coordinated Orthogonal Frequency Division Multiple Access (COFDMA) transmission.

Clause 116. The method of any one of clauses 109-115, further comprising transmitting, by the first AP, a physical layer protocols data unit (PPDU) during the multi-AP transmission, and wherein the PPDU comprises a broadcast frame, a multi-cast frame, or an individually addressed data frame.

Clause 117. The method of any one of clauses 109-116, wherein the PPDU comprises a Single User (SU) PPDU or a Multi-User (MU) PPDU.

Clause 118. The method of any one of clauses 109-117, wherein the second frame comprises a trigger frame.

Clause 119. The method of any one of clauses 109-118, wherein the trigger frame is a null data packet (NDP) feedback report poll (NFRP) trigger frame.

Clause 120. The method of any one of clauses 109-119, wherein transmitting the second frame comprises transmitting the second frame aggregated with the first frame.

Clause 121. A computing device comprising one or more processors and memory storing instructions that, when executed by the one or more processors, cause the computing device to perform the method of any one of clauses 109-120.

Clause 122. A system comprising an access point (AP) configured to perform the method of any one of clauses 109-120, and the AP configured to receive at least one message from another AP.

Clause 123. A computer-readable medium storing instructions that, when executed, cause performance of the method of any one of clauses 109-120.

Clause 124. The method of any one of clauses 1-17, wherein the first frame comprises a coordination request frame to join a multi-AP set of the first AP.

Clause 125. The method of any one of clauses 1-17, wherein the primary channel of the second AP corresponds to a default channel that the second AP monitors for management frames.

A computing device may perform a method comprising multiple operations. A first access point (AP) may receive, from a second AP, a first frame comprising a first indication of a primary channel of the second AP. The first AP may transmit a multi-AP buffer status report poll (MBSRP) frame. The first AP may receive a multi-AP buffer status report (MBSR) frame comprising: a buffer status report (BSR); and a second indication of whether the second AP is configured to transmit to multiple users during the multi-AP transmission. The first AP may allocate, based on the second indication and based on the second AP being configured to transmit to multiple users during the multi-AP transmission, a frequency channel to the second AP for the multi-AP transmission, wherein the frequency channel allocated to the second AP is the primary channel of the second AP. The first AP may transmit a multi-AP schedule announcement (MSA) frame. The first AP may transmit, based on the second indication, a third frame comprising a frequency allocation, wherein the frequency allocation is to the second AP for the multi-AP transmission. The first AP may be a master AP and the second AP may be a slave AP. The first AP may be a slave AP and the second AP may be a master AP. The MBSRP frame may be configured to poll, during a transmit opportunity (TXOP) obtained by the first AP, the second AP for buffered traffic for a multi-AP transmission. The MSA frame may comprise the frequency channel allocated to the second AP for the multi-AP transmission. The first frame may comprise a coordination request frame to join a multi-AP set of the first AP. The primary channel of the second AP may correspond to a default channel that the second AP monitors for management frames. The primary channel of the second AP may correspond to a default channel configured for transmission of beacon frames by the second AP. The first AP may transmit a fourth frame polling the second AP for buffered traffic for the multi-AP transmission. The BSR for the multi-AP transmission may indicate a traffic identifier (TID) for traffic having a non-empty queue size at the second AP. The first AP may allocate the primary channel of the second AP, or another channel, to the second AP for the multi-AP transmission, if the second AP does not intend to transmit to multiple users during the multi-AP transmission. The first AP may determine whether the primary channel of second AP is allocated to another AP for the multi-AP transmission. The first AP may allocate the primary channel of the second AP to the second AP for the multi-AP transmission, if the primary channel of the second AP is not allocated to another AP for the multi-AP transmission. The multi-AP transmission may be a Coordinated Orthogonal Frequency Division Multiple Access (COFDMA) transmission. The second AP may transmit a physical layer protocol data unit (PPDU) during the multi-AP transmission, and the PPDU may comprise at least one of: a broadcast frame, a multi-cast frame, or an individually addressed data frame. A computing device may comprise one or more processors and memory storing instructions that, when executed by the one or more processors, may cause the computing device to perform any one or more of the operations described herein. A system may comprise an access point (AP) configured to perform any one or more of the operations described herein, and the AP may be configured to receive at least one message from another AP. A computer-readable medium may store instructions that, when executed, cause performance of any one or more of the operations described herein.

A computing device may perform a method comprising multiple operations. A first access point (AP) may receive, from a second AP, a first frame comprising a first indication of a primary channel of the second AP. The first AP may receive a second frame comprising: a buffer status report (BSR) for a multi-AP transmission during a transmit opportunity (TXOP) obtained by the first AP; and a second indication of whether the second AP intends to transmit to multiple users during the multi-AP transmission. The first AP may transmit, based on the second indication, a third frame comprising a frequency allocation, wherein the frequency allocation is to the second AP for the multi-AP transmission. The first AP may transmit a fourth frame polling the second AP for buffered traffic for the multi-AP transmission. The BSR for the multi-AP transmission may indicate a traffic identifier (TID) for traffic having a non-empty queue size at the second AP. The second frame may comprise a multi-AP buffer status report (MBSR) frame. The first frame may comprise a coordination request frame to join a multi-AP set of the first AP. The primary channel of the second AP may correspond to a default channel that the second AP monitors for management frames. The primary channel of the second AP may correspond to a default channel that the second AP uses to transmit beacon frames. The fourth frame may comprise a multi-AP buffer status report poll (MBSRP) frame. The first AP may allocate, based on the indication of whether the second AP intends to transmit to multiple users during the multi-AP transmission, a frequency channel to the second AP for the multi-AP transmission. The first AP may allocate, based on the second AP intending to transmit to multiple users for the multi-AP transmission, the primary channel of the second AP to the second AP for the multi-AP transmission. The first AP may allocate, based on the second AP not intending to transmit to multiple users during the multi-AP transmission, the primary channel of the second AP, or another channel, to the second AP for the multi-AP transmission. The first AP may determine whether the primary channel of the second AP is allocated to another AP for the multi-AP transmission. The first AP may allocate, based on the primary channel of the second AP not being allocated to another AP for the multi-AP transmission, the primary channel of the second AP to the second AP for the multi-AP transmission. The third frame may comprise a multi-AP schedule announcement (MSA) frame. The first AP may determine whether the primary channel of the second AP indicated in the first frame is distinct from a confirmed primary channel of a third AP, wherein the third AP is a member of a multi-AP set of the first AP. The first AP may transmit, based on the determination, a fifth frame to the second AP confirming or modifying the primary channel of the second AP. The primary channel of the second AP indicated in the first frame may be the same as the confirmed primary channel of the third AP, and the fifth frame may instruct the second AP to modify its primary channel to a different channel. The multi-AP transmission may be a Coordinated Orthogonal Frequency Division Multiple Access (COFDMA) transmission. The second AP may transmit a physical layer protocol data unit (PPDU) during the multi-AP transmission, and the PPDU may comprise at least one of: a broadcast frame, a multi-cast frame, or an individually addressed data frame. A computing device may comprise one or more processors and memory storing instructions that, when executed by the one or more processors, may cause the computing device to perform any one or more of the operations described herein. A system may comprise an access point (AP) configured to perform any one or more of the operations described herein, and the AP may be configured to receive at least one message from another AP. A computer-readable medium may store instructions that, when executed, cause performance of any one or more of the operations described herein.

A computing device may perform a method comprising multiple operations. A first access point (AP) may transmit a first frame comprising an indication of a primary channel of the first AP. The first AP may receive a multi-AP buffer status report poll (MBSRP) frame wherein the MBSRP frame is configured to poll, during a transmit opportunity (TXOP) obtained by the first AP, the second AP for buffered traffic for a multi-AP transmission. The first AP may transmit a multi-AP buffer status report (MBSR) frame comprising: a buffer status report (BSR); and a second indication of whether the first AP intends to transmit to multiple users during the multi-AP transmission. The first AP may receive, based on the second indication, a multi-AP schedule announcement (MSA) frame comprising a frequency channel allocation to the first AP for the multi-AP transmission, wherein the frequency channel allocation to the first AP is the primary channel of the first AP. The first frame may comprise a coordination request frame to join a multi-AP set of the second AP. The first AP may receive, from the second AP, a fourth frame polling the first AP for buffered traffic for the multi-AP transmission. The second AP may allocate, based on the second indication, a frequency channel to the first AP for the multi-AP transmission. The primary channel of the first AP may correspond to a default channel that the first AP monitors for management frames. The primary channel of the first AP may correspond to a default channel that the first AP uses to transmit beacon frames. The fourth frame may comprise a multi-AP buffer status report poll (MBSRP) frame. The BSR for the multi-AP transmission may indicate a traffic identifier (TID) for traffic having a non-empty queue size at the first AP, and the first AP may wish to transmit during the multi-AP transmission. The second frame may comprise a multi-AP buffer status report (MBSR) frame. The indication of whether the second AP intents to transmit to multiple users during the multi-AP transmission may be provided in a Multiple Receiver physical layer protocol data unit (PPDU) (MRP) field of the MBSR frame. The second AP may allocate, based on the first AP intending to transmit to multiple users during the multi-AP transmission, the primary channel of the first AP to the first AP for the multi-AP transmission. The first AP may not intend to transmit to multiple users during the multi-AP transmission, and the frequency channel allocation to the first AP may be the primary channel for the first AP or to another channel. The third frame may comprise a multi-AP schedule announcement (MSA) frame. The first AP may receive a fifth frame confirming or modifying the primary channel of the first AP. The first AP may set the primary channel of the first AP based on the fifth frame. The primary channel of the first AP indicated in the first frame may be the same as a confirmed primary channel of a third AP, and the fifth frame may instruct the first AP to modify its primary channel to a different channel. The first AP may broadcast the third frame to one or more associated stations (STAs). The frequency channel allocation to the first AP indicated in the third frame may be different than the primary channel of the first AP, and the first AP may transmit, on the frequency channel allocated to the first AP, a sixth frame polling associated stations (STAs) for presence on the allocated frequency channel. The first AP may receive a response frame on the frequency channel allocated to the first AP from at least two associated STAs. The first AP may transmit a PPDU to the at least two associated STAs on the frequency channel allocated to the first AP for the multi-AP transmission. The first AP may receive a response frame on the frequency channel allocated to the first AP from only one associated STA. The first AP may transmit a single-user (SU) PPDU to the associated STA on the frequency channel allocated to the first AP for the multi-AP transmission. The multi-AP transmission may be a Coordinated Orthogonal Frequency Division Multiple Access (COFDMA) transmission. The first AP may transmit a PPDU during the multi-AP transmission, wherein the PPDU comprises a broadcast frame, a multi-cast frame, or an individually addressed data frame. The PPDU may comprise a Single User (SU) PPDU or a Multi-User (MU) PPDU. A computing device may comprise one or more processors and memory storing instructions that, when executed by the one or more processors, may cause the computing device to perform any one or more of the operations described herein. A system may comprise an access point (AP) configured to perform any one or more of the operations described herein, and the AP may be configured to receive at least one message from another AP. A computer-readable medium may store instructions that, when executed, cause performance of any one or more of the operations described herein.

A computing device may perform a method comprising multiple operations. A first frame comprising an indication of a primary channel of the first AP may be received from a first access point (AP), member of a multi-AP set. It may be determined whether the primary channel of the first AP indicated in the first frame is distinct from a confirmed primary channel of a second AP, member of the multi-AP set. A second frame confirming or modifying the primary channel of the first AP based on the determination may be transmitted to the first AP. A third AP, member of the multi-AP set, or an AP controller may perform any one or more of the operations described herein. The first AP may determine the primary channel of the first AP based on receiving a beacon frame from another member of the multi-AP set. The first AP may select the primary channel of the first AP to be different than a frequency channel on which the beacon frame from the other member of the multi-AP set is received. A multi-AP buffer status report poll (MBSRP) frame polling the first AP for buffered traffic for a multi-AP transmission may be transmitted. A multi-AP buffer status report (MBSR) frame may be received from the first AP. The primary channel of the first AP may be allocated to the first AP for the multi-AP transmission. A multi-AP schedule announcement (MSA) frame comprising the frequency channel allocation to the first AP for the multi-AP transmission may be transmitted. The multi-AP transmission may be a Coordinated Orthogonal Frequency Division Multiple Access (COFDMA) transmission. The first AP may transmit a physical layer protocol data unit (PPDU) during the multi-AP transmission, and the PPDU may comprise a broadcast frame, a multi-cast frame, or an individually addressed data frame. The PPDU may comprise a Single User (SU) PPDU or a Multi-User (MU) PPDU. A computing device may comprise one or more processors and memory storing instructions that, when executed by the one or more processors, may cause the computing device to perform any one or more of the operations described herein. A system may comprise an access point (AP) configured to perform any one or more of the operations described herein, and the AP may be configured to receive at least one message from another AP. A computer-readable medium may store instructions that, when executed, cause performance of any one or more of the operations described herein.

A computing device may perform a method comprising multiple operations. A first access point (AP) may receive, from a second AP, a first frame comprising: a buffer status report (BSR) for a multi-AP transmission during a transmit opportunity (TXOP) obtained by the first AP; and an indication of whether the second AP intends to transmit to multiple users during the multi-AP transmission. The first AP may transmit a second frame comprising a frequency channel allocation to the second AP for the multi-AP transmission, wherein the frequency channel allocation to the second AP is a primary channel of the second AP if the second AP intends to transmit to multiple users during the multi-AP transmission. A computing device may comprise one or more processors and memory storing instructions that, when executed by the one or more processors, may cause the computing device to perform any one or more of the operations described herein. A system may comprise an access point (AP) configured to perform any one or more of the operations described herein, and the AP may be configured to receive at least one message from another AP. A computer-readable medium may store instructions that, when executed, cause performance of any one or more of the operations described herein.

A computing device may perform a method comprising multiple operations. A first access point (AP) may receive, from a second AP, a first frame comprising: a buffer status report (BSR) for the multi-AP transmission during a transmit opportunity (TXOP) obtained by first AP; and a multi-receiver transmit indication for the multi-AP transmission. The first AP may transmit a second frame comprising a frequency channel allocation to the second AP for the multi-AP transmission, wherein the frequency channel allocation to the second AP is a primary channel of the second AP if the multi-receiver transmit indication indicates transmission to multiple users by the second AP. A computing device may comprise one or more processors and memory storing instructions that, when executed by the one or more processors, may cause the computing device to perform any one or more of the operations described herein. A system may comprise an access point (AP) configured to perform any one or more of the operations described herein, and the AP may be configured to receive at least one message from another AP. A computer-readable medium may store instructions that, when executed, cause performance of any one or more of the operations described herein.

A computing device may perform a method comprising multiple operations. A first access point (AP) may transmit a first frame comprising an indication of a primary channel of the first AP. The first AP may transmit to a second AP a second frame comprising: a buffer status report (BSR) for a multi-AP transmission during a transmit opportunity (TXOP) obtained by the second AP; and an indication of whether the first AP intends to transmit to multiple users during the multi-AP transmission. The first AP may receive a third frame comprising a frequency channel allocation to the first AP for the multi-AP transmission, wherein the frequency channel allocation to the first AP is the primary channel of the first AP if the first AP intends to transmit to multiple users during the multi-AP transmission. A computing device may comprise one or more processors and memory storing instructions that, when executed by the one or more processors, may cause the computing device to perform any one or more of the operations described herein. A system may comprise an access point (AP) configured to perform any one or more of the operations described herein, and the AP may be configured to receive at least one message from another AP. A computer-readable medium may store instructions that, when executed, cause performance of any one or more of the operations described herein.

A computing device may perform a method comprising multiple operations. A first access point (AP) may receive, from a second AP, a first frame comprising a frequency channel allocation to the first AP for a multi-AP transmission during a transmit opportunity (TXOP) obtained by the second AP. The first AP may transmit, via the frequency channel allocated to the first AP, and based on the frequency channel allocation to the first AP for the multi-AP transmission being different than a primary channel of the first AP, a second frame polling associated stations (STAs) for presence on the allocated frequency channel. The first AP may broadcast the first frame to the associated STAs. The first AP may receive, from the second AP, a third frame polling the first AP for the buffered traffic for the multi-AP transmission. The first AP may transmit, to the second AP, a fourth frame comprising a buffer status report (BSR). The fourth frame may comprise an indication of whether the first AP intends to transmit to multiple users during the multi-AP transmission. The multi-AP transmission may be a Coordinated Orthogonal Frequency Division Multiple Access (COFDMA) transmission. The first AP may transmit a physical layer protocol data unit (PPDU) during the multi-AP transmission and the PPDU may comprise at least one of: a broadcast frame, a multi-cast frame, or an individually addressed data frame. The PPDU may comprise a Single User (SU) PPDU or a Multi-User (MU) PPDU. The second frame may comprise a trigger frame. The trigger frame may be a null data packet (NDP) feedback report poll (NFRP) trigger frame. Transmitting the second frame may comprise transmitting the second frame aggregated with the first frame. A computing device may comprise one or more processors and memory storing instructions that, when executed by the one or more processors, may cause the computing device to perform any one or more of the operations described herein. A system may comprise an access point (AP) configured to perform any one or more of the operations described herein, and the AP may be configured to receive at least one message from another AP. A computer-readable medium may store instructions that, when executed, cause performance of any one or more of the operations described herein.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.11be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multicarrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

## Claims

1. A method comprising:
receiving, by a first access point, AP, from a second AP, a first frame comprising a first indication of a primary channel of the second AP; transmitting a multi-AP buffer status report poll, MBSRP, frame (702, 1212), wherein the MBSRP frame (702, 1212) is configured to poll, during a transmit opportunity, TXOP, obtained by the first AP, the second AP for buffered traffic for a multi-AP transmission;
receiving a multi-AP buffer status report, MBSR, frame (704, 706, 902, 904, 1202, 1204, 1302, 1304, 1402, 1404) comprising:
a buffer status report, BSR; and
a second indication of whether the second AP intends to transmit to multiple users during the multi-AP transmission;
allocating, based on the second indication, a frequency channel to the second AP for the multi-AP transmission, wherein if the second AP intends to transmit to multiple users during the multi-AP transmission, the frequency channel allocated to the second AP is the primary channel of the second AP; and
transmitting a multi-AP schedule announcement, MSA, frame (708, 906, 1206, 1306, 1406), wherein the MSA frame (708, 906, 1206, 1306, 1406) comprises the frequency channel allocated to the second AP for the multi-AP transmission.

2. The method of claim 1, further comprising transmitting, based on the second indication, a third frame comprising a frequency allocation, wherein the frequency allocation is to the second AP for the multi-AP transmission.

3. The method of any one of claims 1-2, wherein the first AP is a slave AP and the second AP is a master AP.

4. The method of any one of claims 1-3, wherein the MBSRP frame (702, 1212) is configured to poll, during a transmit opportunity, TXOP, obtained by the first AP, the second AP for buffered traffic for a multi-AP transmission.

5. The method of any one of claims 1-4, wherein the MSA frame (708, 906, 1206, 1306, 1406) comprises the frequency channel allocated to the second AP for the multi-AP transmission.

6. The method of any one of claims 1-5, wherein the primary channel of the second AP corresponds to a default channel configured for transmission of beacon frames by the second AP.

7. The method of any one of claims 1-6, further comprising:
transmitting a fourth frame polling the second AP for buffered traffic for the multi-AP transmission.

8. The method of any one of claims 1-7, wherein the BSR for the multi-AP transmission indicates a traffic identifier, TID, for traffic having a non-empty queue size at the second AP.

9. The method of any one of claims 1-8, further comprising:
allocating the primary channel of the second AP, or another channel, to the second AP for the multi-AP transmission, if the second AP does not intend to transmit to multiple users during the multi-AP transmission

10. The method of any one of claims 1-9, further comprising:
determining whether the primary channel of second AP is allocated to another AP for the multi-AP transmission; and
allocating the primary channel of the second AP to the second AP for the multi-AP transmission, if the primary channel of the second AP is not allocated to another AP for the multi-AP transmission.

11. The method of any one of claims 1-10, wherein the multi-AP transmission is a Coordinated Orthogonal Frequency Division Multiple Access, COFDMA, transmission.

12. The method of any one of claims 1-11, wherein the second AP transmits a physical layer protocol data unit, PPDU, during the multi-AP transmission, and wherein the PPDU comprises at least one of: a broadcast frame, a multi-cast frame, or an individually addressed data frame.

13. A computing device comprising:
one or more processors; and
memory storing instructions that, when executed by the one or more processors, cause the computing device to perform the method of any one of claims 1-12.

14. A system comprising:
an access point, AP, configured to perform the method of any one of claims 1-12; and
the AP configured to receive at least one message from another AP.

15. A computer-readable medium storing instructions that, when executed, cause performance of the method of any one of claims 1-12.

## Patentansprüche

1. Verfahren, das Folgendes umfasst:
Empfangen eines ersten Frames durch einen ersten Zugangspunkt, AP, von einem zweiten AP, wobei der erste Frame eine erste Angabe eines primären Kanals des zweiten AP umfasst;
Übertragen eines Multi-AP-Pufferstatusbericht-Abfrage-, MBSRP-, Frames (702; 1212), wobei der MBSRP-Frame (702, 1212) so konfiguriert ist, dass er während einer vom ersten AP erhaltenen Übertragungsmöglichkeit, TXOP, den zweiten AP nach gepuffertem Datenverkehr für eine Multi-AP-Übertragung abfragt;
Empfangen eines Multi-AP-Pufferstatusbericht-, MBSR-, Frames (704, 706, 902, 904, 1202, 1204, 1302, 1304, 1402, 1404), der Folgendes umfasst:
einen Pufferstatusbericht, BSR; und
eine zweite Angabe darüber, ob der zweite AP beabsichtigt,
während der Multi-AP-Übertragung an mehrere Nutzer zu übertragen;
Zuweisung eines Frequenzkanals an den zweiten AP für die Multi-AP-Übertragung auf der Grundlage der zweiten Angabe, wobei, wenn der zweite AP beabsichtigt, während der Multi-AP-Übertragung an mehrere Nutzer zu übertragen, der dem zweiten AP zugewiesene Frequenzkanal der primäre Kanal des zweiten AP ist; und
Übertragen eines Multi-AP-Zeitplanankündigung-, MSA-, Frames (708, 906, 1206, 1306, 1406), wobei der MSA-Frame (708, 906, 1206, 1306, 1406) den Frequenzkanal umfasst, der dem zweiten AP für die Multi-AP-Übertragung zugewiesen wurde.

2. Verfahren nach Anspruch 1, das ferner das Übertragen eines dritten Frames auf der Grundlage der zweiten Angabe umfasst, wobei der dritte Frame eine Frequenzzuweisung aufweist, wobei die Frequenzzuweisung für den zweiten AP für die Multi-AP-Übertragung bestimmt ist.

3. Verfahren nach einem der Ansprüche 1 bis 2, wobei der erste AP ein Slave-AP und der zweite AP ein Master-AP ist.

4. Verfahren nach einem der Ansprüche 1 bis 3, wobei der MBSRP-Frame (702, 1212) so konfiguriert ist, dass er während einer vom ersten AP erhaltenen Übertragungsmöglichkeit, TXOP, den zweiten AP nach gepuffertem Datenverkehr für eine Multi-AP-Übertragung abfragt.

5. Verfahren nach einem der Ansprüche 1 bis 4, wobei der MSA-Frame (708, 906, 1206, 1306, 1406) den Frequenzkanal aufweist, der dem zweiten AP für die Multi-AP-Übertragung zugewiesen ist.

6. Verfahren nach einem der Ansprüche 1 bis 5, wobei der primäre Kanal des zweiten AP einem Standardkanal entspricht, der für die Übertragung von Beacon-Frames durch den zweiten AP konfiguriert ist.

7. Verfahren nach einem der Ansprüche 1 bis 6, das ferner Folgendes umfasst:
Übertragen eines vierten Frames, der den zweiten AP nach gepuffertem Datenverkehr für die Multi-AP-Übertragung abfragt.

8. Verfahren nach einem der Ansprüche 1 bis 7, wobei der BSR für die Übertragung über mehrere APs eine Verkehrskennung, TID, für Verkehr angibt, dessen Warteschlangengröße am zweiten AP nicht leer ist.

9. Verfahren nach einem der Ansprüche 1 bis 8, das ferner Folgendes umfasst:
Zuweisung des primären Kanals des zweiten AP oder eines anderen Kanals an den zweiten AP für die Multi-AP-Übertragung, falls der zweite AP nicht beabsichtigt, während der Multi-AP-Übertragung an mehrere Nutzer zu senden.

10. Verfahren nach einem der Ansprüche 1 bis 9, das ferner Folgendes umfasst:
Bestimmen, ob der primäre Kanal des zweiten AP für die Multi-AP-Übertragung einem anderen AP zugewiesen ist; und
Zuweisung des primären Kanals des zweiten AP an den zweiten AP für die Multi-AP-Übertragung, sofern der primäre Kanal des zweiten AP nicht einem anderen AP für die Multi-AP-Übertragung zugewiesen ist.

11. Verfahren nach einem der Ansprüche 1 bis 10, wobei es sich bei der Multi-AP-Übertragung um eine Koordinierter-Orthogonaler-Frequenzmultiplex-Zugang, COFDMA, Übertragung handelt.

12. Verfahren nach einem der Ansprüche 1 bis 11, wobei der zweite AP während der Mulit-AP-Übertragung eine Protokolldateneinheit der physikalischen Schicht, PPDU, überträgt und wobei die PPDU mindestens eines der folgenden Elemente umfasst: einen Broadcast-Frame, einen Multicast-Frame oder einen individuell adressierten Daten-Frame.

13. Computergerät, das Folgendes umfasst:
einen oder mehrere Prozessoren; und
Speicher, der Befehle speichert, die, wenn sie von dem einen oder den mehreren Prozessoren ausgeführt werden, bewirken, dass das Computergerät das Verfahren gemäß einem der Ansprüche 1 bis 12 ausführt.

14. System, das Folgendes umfasst:
einen Zugangspunkt, AP, der so konfiguriert ist, dass er das Verfahren gemäß einem der Ansprüche 1 bis 12 ausführt; und
den AP, der so konfiguriert ist, dass er mindestens eine Nachricht von einem anderen AP empfängt.

15. Computerlesbares Medium, auf dem Befehle gespeichert sind, die bei ihrer Ausführung die Durchführung des Verfahrens gemäß einem der Ansprüche 1 bis 12 bewirken.

## Revendications

1. Procédé comprenant les étapes suivantes :
recevoir par un premier point d'accès, AP, et en provenance d'un deuxième AP une première trame comprenant une première indication d'un canal primaire du deuxième AP ;
transmettre une trame d'interrogation de rapport de statut de tampon multi-AP, MBSRP, (702, 1212), dans lequel la trame MBSRP (702, 1212) est configurée pour, au cours d'une opportunité de transmission, TXOP, obtenue par le premier AP, interroger le deuxième AP concernant un trafic mis en tampon pour une transmission multi-AP ;
recevoir une trame de rapport de statut de tampon multi-AP, MBSR, (704, 706, 902, 904, 1202, 1204, 1302, 1304, 1402, 1404) comprenant :
un rapport de statut de tampon, BSR, et
une deuxième indication précisant si le deuxième AP a l'intention de transmettre vers de multiples utilisateurs pendant la transmission multi-AP ;
sur la base de la deuxième indication, allouer un canal de fréquence au deuxième AP pour la transmission multi-AP, dans lequel, si le deuxième AP a l'intention de transmettre vers de multiples utilisateurs pendant la transmission multi-AP, le canal de fréquence alloué au deuxième AP est le canal primaire du deuxième AP ; et
transmettre une trame d'annonce de planification multi-AP, MSA, (708, 906, 1206, 1306, 1406), dans lequel la trame MSA (708, 906, 1206, 1306, 1406) comprend le canal de fréquence alloué au deuxième AP pour la transmission multi-AP.

2. Procédé selon la revendication 1, comprenant en outre, sur la base de la deuxième indication, le fait de transmettre une troisième trame comprenant une allocation de fréquence, dans lequel l'allocation de fréquence est destinée au deuxième AP pour la transmission multi-AP.

3. Procédé selon l'une des revendications 1 et 2, dans lequel le premier AP est un AP exécutant et le deuxième AP est un AP instructeur.

4. Procédé selon l'une des revendications 1 à 3, dans lequel la trame MBSRP (702, 1212) est configurée pour, au cours d'une opportunité de transmission, TXOP, obtenue par le premier AP, interroger le deuxième AP concernant un trafic mis en tampon pour une transmission multi-AP.

5. Procédé selon l'une des revendications 1 à 4, dans lequel la trame MSA (708, 906, 1206, 1306, 1406) comprend le canal de fréquence alloué au deuxième AP pour la transmission multi-AP.

6. Procédé selon l'une des revendications 1 à 5, dans lequel le canal primaire du deuxième AP correspond à un canal par défaut configuré pour la transmission de trames de balise par le deuxième AP.

7. Procédé selon l'une des revendications 1 à 6, comprenant en outre l'étape suivante :
transmettre une quatrième trame interrogeant le deuxième AP concernant le trafic mis en tampon pour la transmission multi-AP.

8. Procédé selon l'une des revendications 1 à 7, dans lequel le BSR pour la transmission multi-AP indique un identifiant de trafic, TID, concernant un trafic ayant une taille de file d'attente non vide au niveau du deuxième AP.

9. Procédé selon l'une des revendications 1 à 8, comprenant en outre l'étape suivante :
allouer le canal primaire du deuxième AP ou un autre canal au deuxième AP pour la transmission multi-AP si le deuxième AP n'a pas l'intention de transmettre vers de multiples utilisateurs pendant la transmission multi-AP.

10. Procédé selon l'une des revendications 1 à 9, comprenant en outre les étapes suivantes :
déterminer si le canal primaire du deuxième AP est alloué à un autre AP pour la transmission multi-AP ; et
allouer le canal primaire du deuxième AP au deuxième AP pour la transmission multi-AP si le canal primaire du deuxième AP n'est pas alloué à un autre AP pour la transmission multi-AP.

11. Procédé selon l'une des revendications 1 à 10, dans lequel la transmission multi-AP est une transmission à accès multiple coordonné à répartition en fréquences orthogonales, COFDMA.

12. Procédé selon l'une des revendications 1 à 11, dans lequel le deuxième AP transmet une unité de données de protocole de couche physique PPDU, pendant la transmission multi-AP, et dans lequel la PPDU comprend au moins une parmi : une trame de diffusion, une trame de multidiffusion ou une trame de données adressée individuellement.

13. Dispositif informatique comprenant :
un ou plusieurs processeurs ; et
une mémoire stockant des instructions qui, lorsqu'elles sont exécutées par les un ou plusieurs processeurs, amènent le dispositif informatique à mettre en œuvre le procédé selon l'une des revendications 1 à 12.

14. Système comprenant :
un point d'accès, AP, configuré pour mettre en œuvre le procédé selon l'une des revendications 1 à 12 ; et
l'AP étant configuré pour recevoir au moins un message en provenance d'un autre AP.

15. Support lisible par ordinateur stockant des instructions qui, lorsqu'elles sont exécutées, entraînent la mise en œuvre du procédé selon l'une des revendications 1 à 12.
